# EUROPEAN PATENT APPLICATION

(11) **EP 2 058 757 A1**
(43) Date of publication of application: **13.05.2009**
(21) Application number: 07791857.1
(22) Date of filing: 02.08.2007
(51) Int. Cl.: G06Q 30/00

(54) **ELECTRONIC ADVERTISEMENT DELIVERY SYSTEM, ELECTRONIC ADVERTISEMENT DELIVERY SERVER, ELECTRONIC ADVERTISEMENT DELIVERY METHOD, INFORMATION RECORDING MEDIUM, AND PROGRAM**

(30) Priority: 31.08.2006 JP 2006236419
(71) Applicant: Konami Digital Entertainment Co., Ltd., Tokyo 107-8324 (JP)
(72) Inventor: KANEYOSHI, Sadaaki, Tokyo 107-8324 (JP)
(74) Representative: Epping - Hermann - Fischer
(86) International application number: PCT/JP2007/065183
(87) International publication number: WO 2008/026419

(57) **Abstract**

In an electronic advertisement distribution system (10), an electronic advertisement distribution server (20) selects the first sending destination, distributes an electronic advertisement, and stores history information. An electronic advertisement distribution terminal (40) receives and outputs the electronic advertisement, receives an entry of a new sending destination, and notifies it to the electronic advertisement distribution server (20). If a permission condition that "the number of times the electronic advertisement has been sent has not reached the number designated by the advertiser, and the electronic advertisement has not been sent to the new sending destination" is satisfied, the electronic advertisement distribution server (20) secondly distributes the electronic advertisement to the new sending destination and stores history information. The electronic advertisement distribution system (10) repeats electronic advertisement distribution the number of times designated by the advertiser, and terminates electronic advertisement distribution when the number of times designated by the advertiser is reached.

## Description

### Technical Field

The present invention relates to an electronic advertisement distribution system, an electronic advertisement distribution server, electronic advertisement distribution method, information recording medium, and a program that are suitable for distributing an advertisement efficiently to many users.

### Background Art

Systems for distributing electronic advertisements with the use of mobile terminals such as cellular phones are widely known. For example, Patent Literature 1 discloses a system that allows a user to retrieve detailed advertisement information by inserting or holding a recording medium that stores the user's personal information into or over a predetermined reading device that is set up near an advertisement that intrigues the user's interest. Patent Literature 2 discloses a system that can estimate the advertising effectiveness by selectively distributing an advertisement to mobile terminals that are located within a specific area. Patent Literature 3 discloses a system in which terminals such as cellular phones, personal computers, etc. that have a display device for displaying received advertisements are rented to users, and advertisements are distributed to these terminals. Patent Literature 4 discloses a system that distributes users with benefits that are proportional to how many advertisements the users have received and how much they are exposed to the advertisements. Such electronic advertisement distribution systems can enable advertisers to distribute advertisements to users via the Internet, electronic mails, etc.

Systems for allowing users to exchange real-time messages with the use of mobile terminals are also widely known. For example, Patent Literature 5 discloses a messaging system that can distribute a command-based Short Message Service (SMS) for a group use, in which users are organized into a group based on a predetermined command, and the users exchange arbitrary messages with the group members.
Patent Literature 1: Unexamined Japanese Patent Application KOKAI Publication No. 2004-110753
Patent Literature 2: Unexamined Japanese Patent Application KOKAI Publication No. 2001-359166
Patent Literature 3: Unexamined Japanese Patent Application KOKAI Publication No. 2002-197014
Patent Literature 4: Unexamined Japanese Patent Application KOKAI Publication No. 2003-510654
Patent Literature 5: Unexamined Japanese Patent Application KOKAI Publication No. 2005-278146

### Disclosure of Invention

### Problem to be Solved by the Invention

Such conventional electronic advertisement distribution systems as described above cannot bring the users into visiting the web sites of the advertisers or into retrieving detailed advertisement information unless the users have considerably high interests in the subjects of the advertisements. Further, the advertisers have had difficulty making many users get interested efficiently. For example, consider a known method (so-called word-of-mouth marketing method) for sending an advertisement by attaching it to a short message or an e-mail and widely publicizing the advertisement by expecting the e-mail to be passed on to other users, who may be friends, etc. This method gets the advertisement content old when the e-mail with the advertisement is passed on, and can hardly circulate the information fresh. Furthermore, uncontemplated distribution of advertisements to the users cannot return a significant advertising effectiveness to the advertisers, who therefore suffer a problem of wasting a lot of advertising costs.

The present invention aims for solving such a problem, and an object of the present invention is to distribute an electronic advertisement distribution system, an electronic advertisement distribution server, an electronic advertisement distribution method, an information recording medium, and a program that are suitable for efficiently distributing an advertisement to many users.

### Means for Solving the Problem

To achieve the above object, the following invention will be disclosed according to the principle of the present invention.

An electronic advertisement distribution system according to a first aspect of the present invention is an electronic advertisement distribution system that includes: a server that distributes an electronic advertisement a number of times that is designated by an advertiser; and a plurality of terminals that receive the electronic advertisement, and the system is configured as follows.
First, (a) the serve includes: a history storage unit, a terminal selecting unit, and an electronic advertisement distribution unit.
The history storage unit stores history information that indicates a terminal to which the electronic advertisement has been distributed.
The terminal selecting unit selects any terminal from the plurality of terminals.
The electronic advertisement distribution unit distributes the electronic advertisement to the selected terminal.
Then, (b) each of the plurality of terminals includes an electronic advertisement receiving unit, an output unit, a sending destination entry receiving unit, and a sending destination notifying unit.
The electronic advertisement receiving unit receives the electronic advertisement distributed by the server.
The output unit outputs the received electronic advertisement.
The sending destination entry receiving unit receives from a user, an entry of a new sending destination to which the electronic advertisement is to be sent.
The sending destination notifying unit notifies the new sending destination to the server.
Then, (c) the server further includes: a sending destination receiving unit and the permission condition determining unit.
The sending destination receiving unit receives the new sending destination notified by the terminal.
The permission condition determining unit determines based on the history information whether a permission condition that "a number of times the electronic advertisement has been sent has not yet reached the designated number of times, and the electronic advertisement has not yet been sent to the new sending destination" is satisfied or not.
Then, in a case where the permission condition is satisfied, the electronic advertisement distribution unit distributes the electronic advertisement to the new sending destination.
As a result, the electronic advertisement distribution system can distribute the electronic advertisement efficiently to the users of the terminals.

An electronic advertisement distribution system according to another aspect of the present invention is an electronic advertisement distribution system that includes a server that distributes an electronic advertisement a number of times that is designated by an advertiser; and a plurality of terminals that receive the electronic advertisement, and the system is configured as follows.
First, (a) the server includes a history storage unit, a terminal selecting unit, and an electronic advertisement distribution unit.
The history storage unit stores history information that indicates a terminal to which the electronic advertisement has been distributed.
The terminal selecting unit selects any terminal from the plurality of terminals.
The electronic advertisement distribution unit distributes to the selected terminal, the electronic advertisement, and notification necessary/unnecessary information that specifies whether notification of a new sending destination is necessary or not, which depends on whether a number of times the electronic advertisement has been sent is smaller or not than the designated number of times.
Then, (b) each of the plurality of terminals includes an electronic advertisement receiving unit, an output unit, a sending destination entry receiving unit, and a sending destination notifying unit.
The electronic advertisement receiving unit receives the electronic advertisement and the notification necessary/unnecessary information distributed by the server.
The output unit outputs the received electronic advertisement.
The sending destination entry receiving unit receives from a user, an entry of a new sending destination to which the electronic advertisement is to be sent, in a case where the received notification necessary/unnecessary information specifies that notification is necessary.
The sending destination notifying unit notifies the received new sending destination to the server.
Then, (c) the server further includes a sending destination receiving unit and a permission condition determining unit.
The sending destination receiving unit receives the new sending destination notified by the terminal.
The permission condition determining unit determines based on the history information whether a permission condition that "a number of times the electronic advertisement has been sent has not yet reached the designated number of times, and the electronic advertisement has not yet been sent to the new sending destination" is satisfied or not.
Then, the electronic advertisement distribution unit distributes the electronic advertisement to the new sending destination in a case where the permission condition is satisfied.
As a result, the electronic advertisement distribution system can distributes the electronic advertisement efficiently to the users of the terminals.

The server may further include a completion notification sending unit that, when the new sending destination is received, sends referral reception completion notification to the terminal that has notified the new sending destination.
Each of the plurality of terminals may further include a completion notification receiving unit that receives the referral reception completion notification.
As a result, the electronic advertisement distribution system can appropriately select a new sending destination.

The server may further include a completion notification sending unit that, after the electronic advertisement is distributed to the new sending destination, sends referral reception completion notification to the terminal that has notified the new sending destination.
Each of the plurality of terminals may further include a completion notification receiving unit that receives the referral reception completion notification.
As a result, the electronic advertisement distribution system can appropriately select a new sending destination.

The server may further include an addition control unit that, when it is determined, while the permission condition is not satisfied, that the number of times the electronic advertisement has been sent has reached the designated number of times, performs control to query the advertiser of the electronic advertisement whether to increase the number of times to distribute the electronic advertisement, to receive an entry of addition information that indicates a number of times that is to be added, and to update the designated number of times based on the addition information.
As a result, the electronic advertisement distribution system can update the number of times to distribute the electronic advertisement designated by the advertiser.

When it is determined, while the permission condition is not satisfied, that the electronic advertisement has already been sent to the new sending destination, the terminal selecting unit may select a yet new sending destination randomly from the plurality of terminals.
As a result, the electronic advertisement distribution system can arbitrarily select a sending destination for the electronic advertisement.

Area information may be designated for the electronic advertisement by the advertiser.
The terminal may further include a positional information acquiring unit that acquires positional information that indicates a current position of the terminal; and a positional information sending unit that sends the acquired positional information to the server.
The server may further include a positional information receiving unit that receives the positional information from the terminal.
In the server, the terminal selecting unit may randomly select a terminal from terminals that are located within an area that is specified by the area information, and
the electronic advertisement distribution unit may distribute a terminal list that are located within the area specified by the area information to the terminal.
In the terminal, the electronic advertisement receiving unit may receive the terminal list from the server; and
the sending destination entry receiving unit may make any terminal be selected from the received terminal list, and determine the selected terminal as the new sending destination.
As a result, the electronic advertisement distribution system can change the manner in which the electronic advertisement is distributed, depending on the positions of the terminals.

An electronic advertisement distribution server according to another aspect of the present invention is a server that distributes an electronic advertisement to a plurality of terminals a number of times that is designated by an advertiser, and includes a history storage unit, a terminal selecting unit, an electronic advertisement distribution unit, a sending destination receiving unit, and a permission condition determining unit.
The history storage unit stores history information that indicates a terminal to which the electronic advertisement has been distributed.
The terminal selecting unit selects any terminal from the plurality of terminals.
The electronic advertisement distribution unit distributes the electronic advertisement to the selected terminal.
The sending destination receiving unit receives a new sending destination to which the electronic advertisement is to be sent, which is notified by the terminal.
The permission condition determining unit determines based on the history information whether a permission condition that "a number of times the electronic advertisement has been sent has not yet reached the designated number of times, and the electronic advertisement has not yet been sent to the new sending destination" is satisfied or not.
Then, the electronic advertisement distribution unit distributes the electronic advertisement to the new sending destination in a case where the permission condition is satisfied.
As a result, the electronic advertisement distribution server can distribute the electronic advertisement efficiently to the users of the terminals.

An electronic advertisement distribution method according to another embodiment of the present invention is an electronic advertisement distribution method that is performed by a server, which includes a history storage unit; a terminal selecting unit; an electronic advertisement distribution unit; a sending destination receiving unit; and a permission condition determining unit, and distributes an electronic advertisement to a plurality of terminals a number of times that is designated by an advertiser. The method includes a terminal selecting step, an electronic advertisement distributing step, a sending destination receiving step, and a permission condition determining step.
The history storage unit stores history information that indicates a terminal to which the electronic advertisement has been distributed.
At the terminal selecting step, the terminal selecting unit selects any terminal from the plurality of terminals.
At the electronic advertisement distributing step, the electronic advertisement distribution unit distributes the electronic advertisement to the selected terminal.
At the sending destination receiving step, the sending destination receiving unit receives a new sending destination to which the electronic advertisement is to be sent, which is notified by the terminal.
At the permission condition determining step, the permission condition determining unit determines based on the history information whether a permission condition that "a number of times the electronic advertisement has been sent has not yet reached the designated number of times, and the electronic advertisement has not yet been sent to the new sending destination" is satisfied or not.
Then, at the electronic advertisement distributing step, the electronic advertisement is distributed to the new sending destination in a case where the permission condition is satisfied.
As a result, the server that employs this electronic advertisement distribution method can distribute the electronic advertisement efficiently to the users of the terminals.

A computer-readable information recording medium according to another aspect of the present invention stores a program that controls a computer, which distributes an electronic advertisement to a plurality of terminals a number of times that is designated by an advertiser, to function as a history storage unit, a terminal selecting unit, an electronic advertisement receiving unit, a sending destination receiving unit, and a permission condition determining unit.
The history storage unit stores history information that indicates a terminal to which the electronic advertisement has been distributed.
The terminal selecting unit selects any terminal from the plurality of terminals.
The electronic advertisement distribution unit distributes the electronic advertisement to the selected terminal.
The sending destination receiving unit receives from the terminal, a new sending destination to which the electronic advertisement is to be sent.
The permission condition determining unit determines based on the history information whether a permission condition that "a number of times the electronic advertisement has been sent has not yet reached the designated number of times, and the electronic advertisement has not yet been sent to the new sending destination" is satisfied or not.
Then, the electronic advertisement distribution unit distributes the electronic advertisement to the new sending destination in a case where the permission condition is satisfied.
As a result, the information recording medium can control the computer to function as a server that can distribute the electronic advertisement efficiently to the users of the terminals.

A program according to another aspect of the present invention controls a computer, which distributes an electronic advertisement to a plurality of terminals a number of times that is designated by an advertiser, to function as a history storage unit, a terminal selecting unit, an electronic advertisement distribution unit, a sending destination receiving unit, and a permission condition determining unit.
The history storage unit stores history information that indicates a terminal to which the electronic advertisement has been distributed.
The terminal selecting unit selects any terminal from the plurality of terminals.
The electronic advertisement distribution unit distributes the electronic advertisement to the selected terminal.
The sending destination receiving unit receives from the terminal, a new sending destination to which the electronic advertisement is to be sent.
The permission condition determining unit determines based on the history information whether a permission condition that "a number of times the electronic advertisement has been sent has not yet reached the designated number of times, and the electronic advertisement has not yet been sent to the new sending destination" is satisfied or not.
Then, the electronic advertisement distribution unit distributes the electronic advertisement to the new sending destination in a case where the permission condition is satisfied.
As a result, the program can control the computer to function as a server that can distribute the electronic advertisement efficiently to the users of the terminals.

The program according to the present invention may be recorded on a computer-readable information recording medium such as a compact disk, a flexible disk, a hard disk, a magneto optical disk, a digital video disk, a magnetic tape, a semiconductor memory, etc.
The above program may be distributed or sold via a computer communication network, independently from a computer on which the program is executed. The information recording medium described above may be distributed or sold independently from a computer.

### Effect of the Invention

According to the present invention, it is possible to distribute an electronic advertisement distribution system, an electronic advertisement distribution server, an electronic advertisement distribution method, and a program that are suitable for distributing an advertisement efficiently to many users.

### Brief Description of Drawings

[Fig. 1] A diagram for explaining the configuration of an electronic advertisement distribution system according to the present invention.
[Fig. 2] A diagram showing a schematic structure of an electronic advertisement distribution server.
[Fig. 3] A diagram for explaining a process performed by the electronic advertisement distribution server.
[Fig. 4] A diagram showing an example configuration of history information.
[Fig. 5] A diagram showing an example configuration of a terminal list.
[Fig. 6] A diagram showing a display example of an electronic advertisement displayed on a display of an electronic advertisement distribution terminal.
[Fig. 7] A diagram showing a schematic configuration of an electronic advertisement distribution terminal.
[Fig. 8] A diagram for explaining a process performed by the electronic advertisement distribution terminal.
[Fig. 9] A diagram for explaining a scheme of interactive operation between the electronic advertisement distribution server and the electronic advertisement distribution terminal.
[Fig. 10] A diagram for explaining a scheme according to embodiment 2 of interactive operation between the electronic advertisement distribution server and the electronic advertisement distribution terminal.
[Fig. 11] A diagram for explaining a process performed by the electronic advertisement distribution server according to embodiment 3.
[Fig. 12] A diagram for explaining a process performed by the electronic advertisement distribution terminal according to embodiment 3.
[Fig. 13] A diagram showing a display example of a referral reception completion notification displayed on the display of the electronic advertisement distribution terminal.
[Fig. 14] A diagram for explaining a scheme according to embodiment 4 of interactive operation between the electronic advertisement distribution server and the electronic advertisement distribution terminal.
[Fig. 15] A diagram for explaining a scheme according to embodiment 4 of interactive operation between the electronic advertisement distribution server and the electronic advertisement distribution terminal.
[Fig. 16] A diagram showing a display example of an electronic advertisement displayed on the display of the electronic advertisement distribution terminal.
[Fig. 17] A diagram for explaining a process performed by the electronic advertisement distribution server according to embodiment 5.
[Fig. 18] A diagram showing an example configuration of distribution quota information stored in an advertiser server.
[Fig. 19] A diagram for explaining an addition control process according to embodiment 5.
[Fig. 20] A diagram for explaining a scheme according to embodiment 6 of interactive operation between the electronic advertisement distribution server and the electronic advertisement distribution terminal.
[Fig. 21] A diagram for explaining a process performed by the electronic advertisement distribution server according to embodiment 7.
[Fig. 22] A diagram for explaining a process performed by the electronic advertisement distribution terminal according to embodiment 7.
[Fig. 23] A diagram showing an example configuration of positional information.
[Fig. 24] A diagram showing an example configuration of a terminal list.
[Fig. 25] A diagram showing an example configuration of a within-area terminal list.
[Fig. 26] A diagram showing a display example of an electronic advertisement displayed on the display of the electronic advertisement distribution terminal.

### Description of Reference Numerals

- 10: electronic advertisement distribution system
- 20: electronic advertisement distribution server
- 30: e-mail server
- 40: electronic advertisement distribution terminal
- 50: wireless base station
- 60: communication network
- 201: control unit
- 202: communication unit
- 203: storage unit
- 251: history storage unit
- 252: terminal selecting unit
- 253: electronic advertisement distribution unit
- 254: sending destination receiving unit
- 255: permission condition determining unit
- 256: completion notification sending unit
- 257: addition control unit
- 258: positional information receiving unit
- 291: history information
- 292: terminal list
- 293: distribution quota information
- 294: within-area terminal list
- 401: communication unit
- 402: sound processing unit
- 403: ROM
- 404: RAM
- 405: key entry unit
- 406: display unit
- 407: I/O
- 408: power source unit
- 409: control unit
- 421: antenna
- 422: speaker
- 423: microphone
- 424: operation key
- 425: display
- 426: external memory
- 451: electronic advertisement receiving unit
- 452: output unit
- 453: sending destination entry receiving unit
- 454: sending destination notifying unit
- 455: completion notification receiving unit
- 456: positional information acquiring unit
- 457: positional information sending unit

### Best Mode for Carrying Out the Invention

### (Embodiment 1)

Next, the embodiments of the present invention will be explained. For facilitating better understanding, embodiments that embody the present invention by using a mobile terminal such as a cellular phone, or a messenger system for e-mails, etc. using a mobile terminal will be explained below. However, these embodiments are intended for illustration not for limiting the scope of the present invention. Hence, although those with ordinary skill in the art can employ embodiments obtained by replacing individual components or all the components of the embodiments below with equivalents of those, such embodiments will also be included in the scope of the present invention.

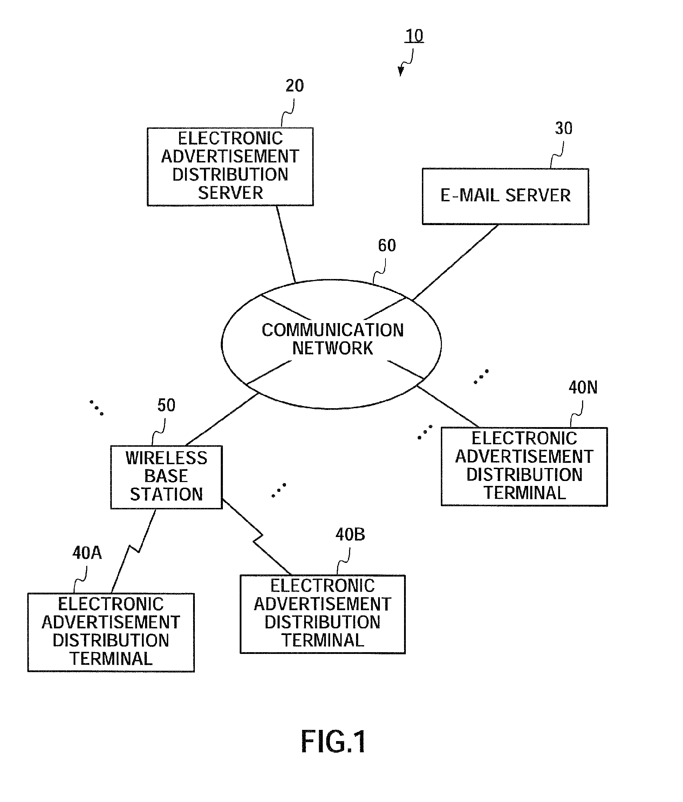

Fig. 1 is a diagram showing an example configuration of an electronic advertisement distribution system 10 according to the present invention. The electronic advertisement distribution system 10 includes an electronic advertisement distribution server 20, an e-mail server 30, electronic advertisement distribution terminals 40, a wireless base station 50, and a communication network 60. There are a plurality of electronic advertisement distribution terminals 40 set up in the electronic advertisement distribution system 10 via the communication network 60.

An electronic advertisement distributed according to the present embodiment is prepared beforehand by an advertiser, and will be distributed to the electronic advertisement distribution terminals 40 a number of times that is designated beforehand by the advertiser via an e-mail commonly used. An electronic advertisement is, for example, a plug for a product or a service, guide for a shop, etc., but the content of the advertisement is not limited by the present invention and can be arbitrarily changed. In the embodiment, an electronic advertisement will be distributed via e-mails, but can be distributed via other methods such as instant messenger (so called "IM"). Needless to say, such a modified embodiment will also be included in the scope of the present invention.

The electronic advertisement distribution server 20 instructs the e-mail server 30 to deliver an e-mail that includes an electronic advertisement, etc. to the electronic advertisement distribution terminals 40 connected via the communication network 60. The electronic advertisement distribution server 20 stores history information that specifies the electronic advertisement distribution terminals 40 to which an electronic advertisement has been distributed, so that the advertiser can know when the electronic advertisement was distributed to which terminals based on the history information. A detailed configuration of the electronic advertisement distribution server 20 will be explained later.

The e-mail server 30 sends an e-mail that includes an electronic advertisement, etc. to the electronic advertisement distribution terminals 40, based on an instruction from the electronic advertisement distribution server 20 or an electronic advertisement distribution terminal 40.

There are a plurality of electronic advertisement distribution terminals 40 (denoted in the diagram as 40A, 40B, and 40N) in the electronic advertisement distribution system 10. The electronic advertisement distribution terminal 40 receives an e-mail including an electronic advertisement, etc. sent from the e-mail server 30. Hence, the user of the electronic advertisement distribution terminal 40 can check the electronic advertisement. The electronic advertisement distribution terminal 40 can notify the electronic advertisement distribution server 20 of an instruction from the user that the received e-mail including the electronic advertisement, etc. should be passed on to another electronic advertisement distribution terminal 40. As long as a predetermined permission condition described later is satisfied, the electronic advertisement distribution server 20 instructs the e-mail server 30 to send an e-mail including the same or similar electronic advertisement, etc. to the notified another electronic advertisement distribution terminal 40. A more detailed configuration of the electronic advertisement distribution terminal 40 will be described later.

The wireless base station 50 is a facility or a device that connects the electronic advertisement distribution terminals 40 to the communication network 60 via wireless communication such as a cellular phone line, a wireless LAN (Local Area Network), etc. Though there is only one wireless base station 50 illustrated in Fig. 1, but a plurality of it may be set up. The electronic advertisement distribution terminals 40 may be connected to the communication network 60 via the wireless base station 50 or may be directly connected to the communication network 60 by a communication cable or the like, not via the wireless base station 50.

The communication network 60 is typically the Internet, but may be any other network such as a LAN, a WAN (Wide Area Network), a private line, a telephone line, etc. The communication network 60 is a network via which the electronic advertisement distribution server 20, the e-mail server 30, and the electronic advertisement distribution terminals 40 described above send or receive data such as messages, and control signals.

In the present embodiment, the electronic advertisement distribution server 20 and the e-mail server 30 are separate functions, but one server that has both the functions may be used. Any or all of the electronic advertisement distribution server 20, the e-mail server 30, and the wireless base station 50 may be distributed in a plural number in the electronic advertisement distribution system 10.

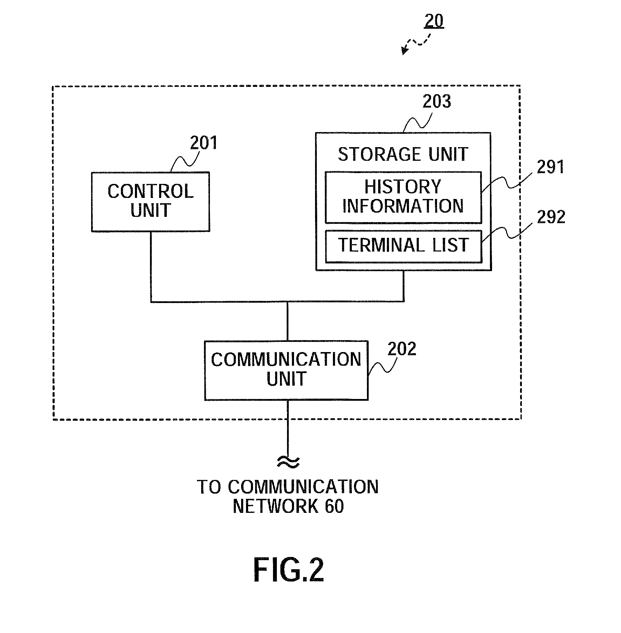

Next, the configuration of the electronic advertisement distribution server 20 will be explained with the use of Fig. 2. The electronic advertisement distribution server 20 includes a control unit 201, a communication unit 202, and a storage unit 203.

The electronic advertisement distribution server 20 stores, in addition to such an electronic advertisement as described above, history information 291 that specifies a terminal to which an electronic advertisement has been distributed, and a list of electronic advertisement distribution terminals 40 that exist in the electronic advertisement distribution system 10 (hereinafter referred to as "terminal list 292"), and sends an electronic advertisement to an electronic advertisement distribution terminal 40. The electronic advertisement distribution server 20 is constituted by an information processing apparatus such as mainframe, workstation, or the like.

The control unit 201 is constituted by a CPU (Central Processing Unit) or the like, and controls each unit of the electronic advertisement distribution server 20 according to such as an OS (Operating System) or a program stored in the storage unit 203. For example, the control unit 201 controls the communication unit 202 to send an electronic advertisement distributed by an advertiser to an electronic advertisement distribution terminal 40.

The communication unit 202 is constituted by predetermined communication devices such as an NIC (Network Interface Card), a router, a modem, etc. The communication unit 202 communicates with the electronic advertisement distribution terminals 40, the e-mail server 30, etc. connected to the communication network 60 under the control of the control unit 201.

The storage unit 203 is constituted by a storage device such as a RAM (Random Access Memory) or the like that distributes a work area, and a storage device such as a hard disk device, a ROM (Read Only Memory), or the like. For example, the storage unit 203 stores a program and OS for controlling the electronic advertisement distribution server 20 as a whole, such an electronic advertisement as described above, history information that specifies a terminal to which an electronic advertisement has been distributed, etc.

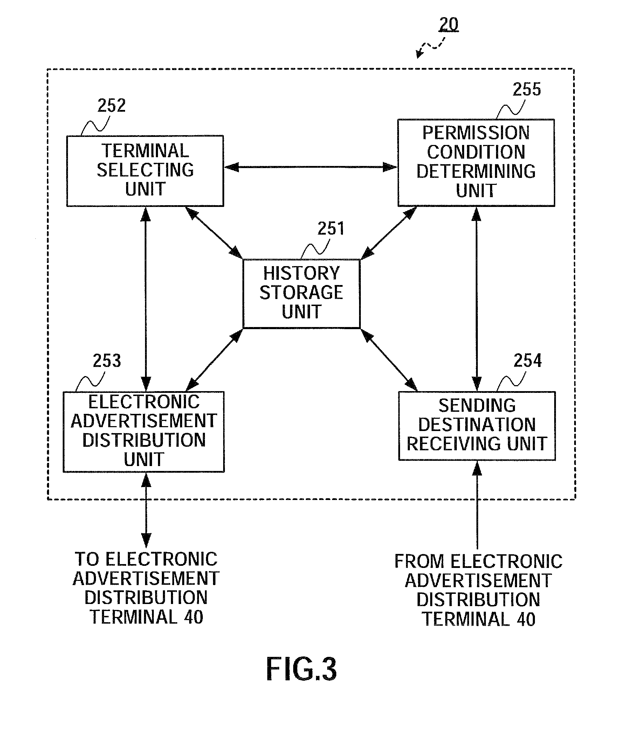

Next, a process to be performed by the electronic advertisement distribution server 20 will be explained with the use of Fig. 3. The electronic advertisement distribution server 20 includes a history storage unit 251, a terminal selecting unit 252, an electronic advertisement distribution unit 253, a sending destination receiving unit 254, and a permission condition determining unit 255.

The history storage unit 251 stores history information 291 that specifies a terminal to which an electronic advertisement has been distributed.

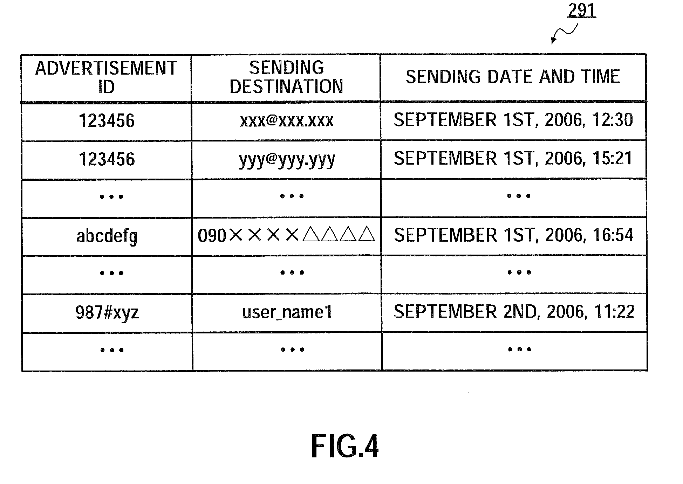

Fig. 4 is an example of a structure of history information 291 stored by the history storage unit 251 is configured. Advertisement ID is identification information by which an electronic advertisement is identified, and represented by numerals, characters, symbols, etc. Sending destination is an address to which the electronic advertisement associated with the advertisement ID has been sent, and an e-mail address is typically used as a sending destination. In a case where a cellular phone, a PHS (Personal Handy-phone System) terminal, and the like are used as the electronic advertisement distribution terminals 40 that are to receive electronic advertisements, a phone number (subscriber's number) can also be used as the sending destination. Further, a user name or the like that is set beforehand uniquely to each user may also be used. However, as will be described later, it is desired that any fixed one kind of these should be used so that it may be easy to determine to which terminals an electronic advertisement has been distributed. Sending date/time indicates the date and time when the electronic advertisement identified by the advertisement ID was sent to the sending destination. Note that the history information 291 shown in Fig. 4 is merely an example, so it may include only part of the above information, or may store any other information in addition to the above information. It is only necessary for the history information 291 stored in the history storage unit 251 to be such information that can allow determination which electronic advertisements have been distributed to which terminals.
The control unit 201 and the storage unit 203 work in cooperation to function as the history storage unit 251.

The terminal selecting unit 252 selects any electronic advertisement distribution terminal 40 from the plurality of electronic advertisement distribution terminals 40 in the electronic advertisement distribution system 10. The electronic advertisement distribution terminal 40 selected by the terminal selecting unit 252 will be the distribution destination (sending destination) to which the electronic advertisement distribution unit 253 distributes an electronic advertisement. The terminal selecting unit 252 selects the destination to which an electronic advertisement will be sent, based on the terminal list 292 that lists electronic advertisement distribution terminals 40 that exist in the electronic advertisement distribution system 10. The selection may be based on a list of electronic advertisement distribution terminals 40 that are pre-registered to be the user of the electronic advertisement distribution system 10.

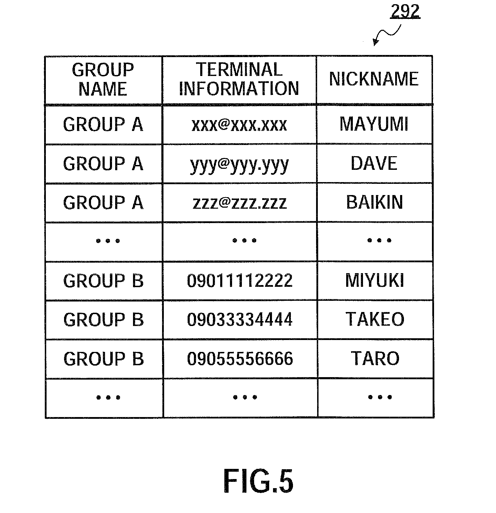

Fig. 5 is an example configuration of the terminal list 292. The terminal list 292 is stored in the storage unit 203. Group name shows information by which groups to which the electronic advertisement distribution terminals 40 are classified based on an arbitrary standard are identified. Such a group name or grouping may be set based on an instruction from a user of an electronic advertisement distribution terminal 40, or may be set arbitrarily by the control unit 201 of the electronic advertisement distribution server 20. Terminal information shows information by which electronic advertisement distribution terminals 40 or users are identified. E-mail address, phone number, user name of the users may be used as the terminal information, and may be identical with the sending destination included in the history information 291 described above. Nickname is an address term that is set beforehand based on the preference of a user of the electronic advertisement distribution terminal 40, and used by the users to address each other in the electronic advertisement distribution system 10. The terminal list 292 shown in Fig. 5 is a mere example, so it may include only part of the above information, or may store any other information in addition to the above information. It is only necessary for the terminal list 292 to be such information that makes it possible to identify what the terminals that exist in the electronic advertisement distribution system 10 are, or what the terminals registered to the electronic advertisement distribution system 10 are.
The control unit 201 and the storage unit 203 work in cooperation to function as the terminal selecting unit 252.

The electronic advertisement distribution unit 253 distributes an electronic advertisement to an electronic advertisement distribution terminal 40 selected by the terminal selecting unit 252, in a case where a predetermined permission condition is satisfied. Specifically, the electronic advertisement distribution unit 253 acquires a sending destination for an electronic advertisement from the terminal selecting unit 252, and controls the communication unit 202 to instruct the e-mail server 30 to send the electronic advertisement to this sending destination. Based on this instruction, the e-mail server 30 sends an e-mail that includes the electronic advertisement to the sending destination. The electronic advertisement distribution server 20 may itself send an e-mail that includes the electronic advertisement. The predetermined permission condition will be described later.

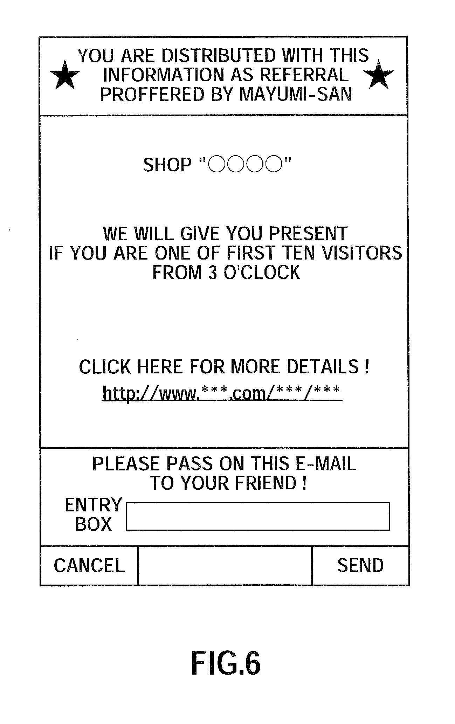

Fig. 6 is an example display screen on which an electronic advertisement sent by the electronic advertisement distribution unit 253 to the electronic advertisement distribution terminal 40 is displayed. In a case where an electronic advertisement is sent to someone as a result of referral to him/her by the user of another electronic advertisement distribution terminal 40, this screen contains information about the referrer. For example, this is shown like "You are distributed with this information as a referral proffered by Mayumi-san", with the use of the nickname of the referrer that is set in the terminal list 292. The electronic advertisement includes the advertiser (e.g., "xxxxx shop"), the advertisement content (e.g., text information such as "We will give you a present if you are one of the first ten visitors from 3 o'clock.", or an image), etc. A link to electronic advertisement data may also be pasted so that the advertiser can distribute more detailed electronic advertisement. The user who has received the electronic advertisement can designate other users such as his/her friends, as referrals to whom the electronic advertisement will be passed on, so an entry box is distributed on the display screen into which the referrals are typed in. The screen of the electronic advertisement shown in Fig. 6 is a mere example, so it may include only part of the above information, or may store other information in addition to the above information. The electronic advertisement may further include a moving image and sounds. The method of entering the referrals may be the user directly entering the sending destinations of the referrals as in the present embodiment, or the user selecting the referrals from a preset address book, or the user selecting the referrals from the terminal list 292 retrieved from the electronic advertisement distribution server 20, and may be changed arbitrarily.
The control unit 201, the communication unit 202, and the storage unit 203 work in cooperation to function as the electronic advertisement distribution unit 253.

The sending destination receiving unit 254 receives a new sending destination for an electronic advertisement, that is notified by the electronic advertisement distribution terminal 40.

To be more specific, for the first distribution of a given electronic advertisement, the electronic advertisement distribution unit 253 distributes the electronic advertisement to the electronic advertisement distribution terminal 40 that is selected by the terminal selecting unit 252. This first sending destination for the electronic advertisement is selected by the terminal selecting unit 252, for example, randomly. Next, the electronic advertisement distribution terminal 40 receives the electronic advertisement and displays such an electronic advertisement as shown in Fig. 6 on its display device. The electronic advertisement distribution terminal 40 receives an entry of a new sending destination for the electronic advertisement, and sends the entered destination to the electronic advertisement distribution server 20. Then, the sending destination receiving unit 254 receives the new sending destination for the electronic advertisement from the electronic advertisement distribution terminal 40. The sending destination received here is the second distribution destination for the electronic advertisement. This process is the same for the third and succeeding distributions.
The control unit 201 and the communication unit 202 work in cooperation to function as the electronic advertisement distribution unit 253.

The permission condition determining unit 255 determines whether a predetermined permission condition is satisfied or not based on the history information 291. The permission condition may be, for example, that "the number of times the electronic advertisement has been sent has not yet reached the designated number, and the electronic advertisement has not yet been sent to the new sending destination".

Here, the permission condition will be explained in more detail. As described above, an electronic advertisement of the present embodiment is distributed only a number of times that is designated by the advertiser. Hence, when the number of times (e.g., ten times) the electronic advertisement distribution unit 253 has distributed the electronic advertisement is reached, the distribution of the electronic advertisement ends. The advertiser can arbitrarily designate the number of times to distribute his/her electronic advertisement, and the designated number is stored in the storage unit 203 in association with the electronic advertisement. The electronic advertisement distribution unit 253 cumulatively counts the number of times the electronic advertisement is distributed each time it distributes the electronic advertisement, and stored the cumulative count in the storage unit 203 in association with the electronic advertisement. Then, the permission condition determining unit 255 determines whether the cumulative number of distribution times for the electronic advertisement has reached the designated number or not.

To improve the advertising effectiveness by the electronic advertisement, it is desirable to let more users know the advertisement. Hence, according to the present embodiment, the electronic advertisement distribution server 20 controls not to distribute the same electronic advertisement to the same user, to whom the electronic advertisement has been already distributed. That is, the permission condition determining unit 255 refers to the history information 291 stored in the history storage unit 251, and determines whether the same electronic advertisement has already been distributed to the next sending destination that is received by the sending destination receiving unit 254. The electronic advertisement distribution unit 253 does not distribute the electronic advertisement to the sending destination if the electronic advertisement has already been distributed there.

In this way, the electronic advertisement distribution unit 253 determines whether or not to distribute the electronic advertisement to the new sending destination based on the determination result obtained by the permission condition determining unit 255. The electronic advertisement distribution unit 253 distributes the electronic advertisement to the sending destination only when such a predetermined permission condition as described above is satisfied.
The control unit 201 and the storage unit 203 work in cooperation to function as the permission condition determining unit 255.

Here, there are some methods for determining the next sending destination, for when the permission condition determining unit 255 determines that the predetermined permission condition is not satisfied. One such method for when the electronic advertisement has already been distributed to the sending destination received by the sending destination receiving unit 254, may be, for example, that the electronic advertisement distribution unit 253 notifies the user that he/she should designate another sending destination, and the electronic advertisement distribution terminal 40 again receives and sends a sending destination. Another method may be that the electronic advertisement distribution unit 253 refers to the history information 291 and the terminal list 292 to randomly select a terminal to which the electronic advertisement has not yet been distributed, and sends the electronic advertisement to the selected terminal.

Also for the first distribution of the electronic advertisement, the sending destination may not necessarily be randomly selected but may be selected based on the history information 291 and the terminal list 292 so that a sending destination that is expected to return a larger advertising effectiveness may be selected. For example, information such as user's age, sex, address, favorite pursuit, etc. may also be stored in the terminal list 292. The customer range to be the advertising target is pinpointed by referring to the terminal list 292, so that the electronic advertisement can be sent to a user from whom a larger advertising effectiveness is expected.

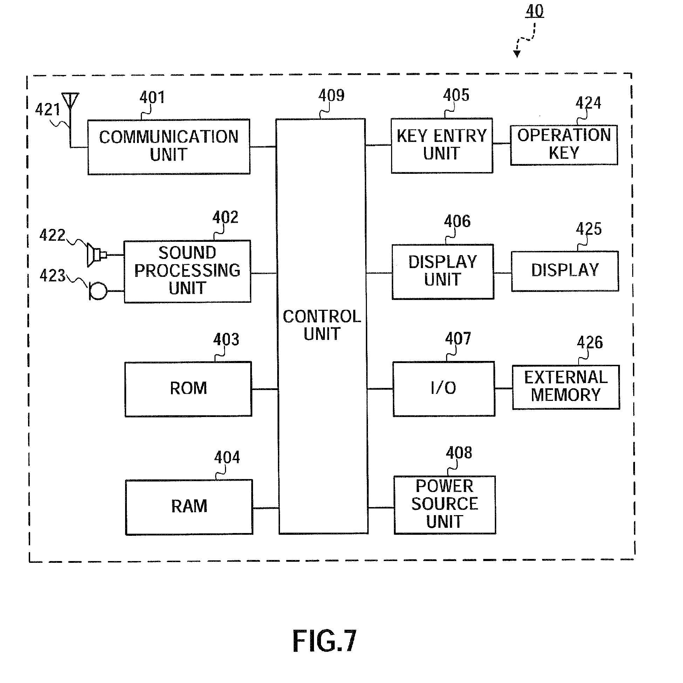

Next, the configuration of the electronic advertisement distribution terminal 40 will be explained with the use of Fig. 7. In the present embodiment, a widely prevailing cellular phone will be used as the electronic advertisement distribution terminal 40. The electronic advertisement distribution terminal 40 includes a communication unit 401, a sound processing unit 402, a ROM 403, a RAM 404, a key entry unit 405, a display unit 406, an I/O (Input/Output) 407, a power source unit 408, and a control unit 409.

When the electronic advertisement distribution terminal 40 functions as a transmitter of a cellular phone, the communication unit 401 modulates a sound signal that is input via a microphone 423 and converted by an A/D (Analog/Digital) converter (unillustrated) included in the sound processing unit 402, and sends the signal to the other party of the communication (receiver) by using an antenna 421 connected to the communication unit 401. When the electronic advertisement distribution terminal 40 functions as a receiver, the communication unit 401 receives a sound signal, etc. by using the antenna 421 connected to the communication unit 401, and demodulates the input sound signal. The demodulated sound signal is input to the sound processing unit 402. The communication unit 401 exchanges information with the wireless base station 50 of the cellular phones or with a GPS (Global Positioning System) satellite, and acquires the positional coordinates of the electronic advertisement distribution terminal 40 as, for example, latitude/longitude information. The communication unit 401 may acquire residential information (e.g., information like "Roppongi, Minato-ku, Tokyo") of a wireless base station 50 or an access point that catches the electronic advertisement distribution terminal 40. Further, the communication unit 401 performs data communication processing, etc. for enabling the electronic advertisement distribution terminal 40 to access another information processing apparatus connected thereto via the Internet or the like. The communication unit 401 may be able to use a plurality of communication methods such as CDMA (Code Division Multiple Access), EV-DO (Evolution-Data Only), wireless LAN, etc.

When the electronic advertisement distribution terminal 40 functions as a transmitter of a cellular phone, the sound processing unit 402 collects the voice of the user, etc. by the microphone 423 connected to the sound processing unit 402, converts the voices, etc. to a sound signal by the A/D converter included in the sound processing unit 402, and outputs the sound signal. When the electronic advertisement distribution terminal 40 functions as a receiver, the sound processing unit 402 outputs the phone voices demodulated by a D/A (Digital/Analog) converter (unillustrated) included in the sound processing unit 402 to a speaker 422 that is connected to the sound processing unit 402. Other than these, the sound processing unit 402 converts sound data of a ringer melody or the like stored in an external memory 426 or the like into a sound signal to output it, or converts a sound signal collected by the microphone 423 into sound data and outputs it.

The ROM 403 is a nonvolatile memory that stores an Operating System (OS), programs, and the like that are necessary for the control of the entire electronic advertisement distribution terminal 40. The control unit 409 reads the OS, the programs, and the like that are stored in the ROM 403 into the RAM 404 to execute them.

The RAM 404 temporarily stores data, programs, and the like that are necessary for the processes performed by the control unit 409. Part of the storage area of the RAM 404 is constituted by a flash memory, and stores an address book used for calling and e-mailing, call logs, setting values for various functions, etc. The control unit 409 secures a variable area in the RAM 404, and performs calculation on the value stored in the variable area. Alternatively, the control unit 409 performs such a process as once storing the value stored in the RAM 404 into a register, performing calculation on the register, and then writing the calculation result back into the RAM 404.

The key entry unit 405 receives an operation signal from an operation key 424, and enters a key code signal corresponding to the operation signal to the control unit 409. The control unit 409 determines what to do based on the key code signal. For example, the operation key 424 is used when the user issues an instruction to the cellular phone, such as when turning ON/OFF the power of the electronic advertisement distribution terminal 40, or when issuing an instruction to receive an electronic advertisement and display it on a display 425. The user of the electronic advertisement distribution terminal 40 can issue an instruction to the electronic advertisement distribution terminal 40 to perform a desired operation, by operating the operation key 424. The key entry unit 405 may be connected not only to the operation key 424, but to other input devices such as an operation button, a pointing device, etc., to acquire control signals entered to such input devices.

The display unit 406 processes image data by the control unit 409 and an image calculation processor (unillustrated) distributed in the display unit 406, and then stores the data in an output buffer (unillustrated) distributed in the display unit 406. The image information stored in the output buffer is converted into an image signal at a predetermined synchronization timing, and output to the display 425 connected to the display unit 406. Images of an electronic advertisement, etc. can be displayed in this way. The display unit 406 displays various screen images necessary for the functions of the cellular phone to be utilized on the display 425, including operational conditions such as power condition, remaining battery level, radio field intensity, server connection condition, unread e-mails, etc., entered phone number, addressee of an e-mail, text to be sent as an e-mail, etc., received data such as moving image data, still image data, phone number of the caller when a call is received, text received as an e-mail, images of an Internet site connected. For example, the display 425 is constituted by an LCD (Liquid Crystal Display), an organic EL (Electroluminescence), or the like.

The I/O 407 gains connection to the external memory 426, which may be a detachable flash memory card or the like, to allow data input/output. Further, the I/O 407 connects the electronic advertisement distribution terminal 40 and an external device such as a personal computer or the like via USB (Universal Serial Bus) connection, to allow data input/output from or to the external device. The I/O 407 may comprise an interface such as an infrared communication interface or the like for connecting with any other external device and communicating with it.

The power source unit 408 is a power source for driving the electronic advertisement distribution terminal 40.

The control unit 409 controls the entire electronic advertisement distribution terminal 40 according to the OS and a control program stored in the ROM 403. The control unit 409 sends a control signal and data via a system bus to each unit described above, or receives a response signal and data from each unit, as control needs arise. The control unit 409 is constituted by a CPU. For example, the control unit 409 reads a content reproducing application stored in the ROM 403 or the like into the RAM 404 and executes it to perform a process of displaying a received electronic advertisement.

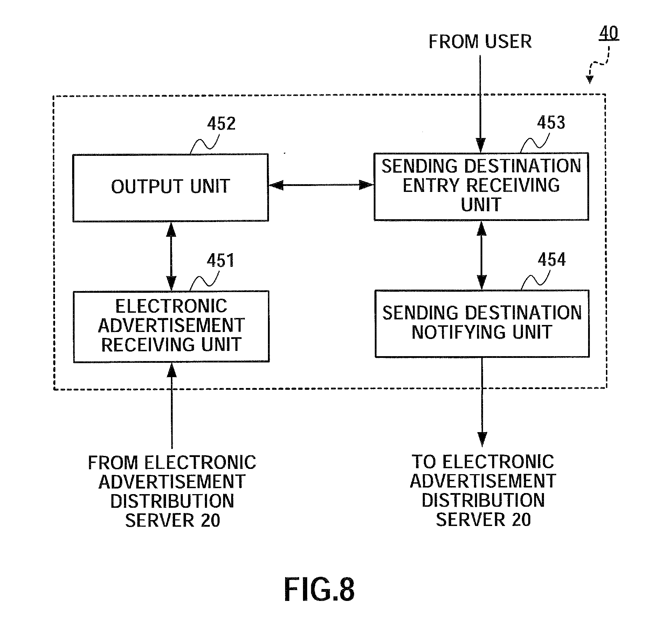

Next, a process performed by the electronic advertisement distribution terminal 40 will be explained with the use of Fig. 8. The electronic advertisement distribution terminal 40 includes an electronic advertisement receiving unit 451, an output unit 452, a sending destination entry receiving unit 453, and a sending destination notifying unit 454.

The electronic advertisement receiving unit 451 receives, by controlling the communication unit 401, an e-mail or the like that includes an electronic advertisement distributed by the electronic advertisement distribution unit 253 of the electronic advertisement distribution server 20, and inputs the data of the received electronic advertisement, etc. to the output unit 452.
The communication unit 401 and the control unit 409 work in cooperation to function as the electronic advertisement receiving unit 451.

The output unit 452 outputs the electronic advertisement, etc. received by the electronic advertisement receiving unit 451 to the display unit 406 and the sound processing unit 402. The display unit 406 displays the image data included in the received electronic advertisement, etc. on the display 425. In a case where the electronic advertisement includes sound data, the sound processing unit 402 reproduces the sound data included in the received electronic advertisement, etc. and outputs it to the speaker 422. Therefore, the user can experience the view and sound of the electronic advertisement. For example, the output unit 452 displays such an advertisement image as shown in Fig. 6 on the display 425.
The display unit 406, the sound processing unit 402, and the control unit 409 work in cooperation to function as the output unit 452.

The sending destination entry receiving unit 453 receives an entry of a new sending destination for the electronic advertisement from the user. For example, when such an advertisement image as shown in Fig. 6 is displayed on the display 425, the user enters a new sending destination (passing-on destination) for the electronic advertisement by using the operation key 424 into the entry box. The sending destination entry receiving unit 453 inputs the entered sending destination to the sending destination notifying unit 454.
The display unit 406, the key entry unit 405, and the control unit 409 operate in cooperation to function as the sending destination entry receiving unit 453.

The sending destination notifying unit 454 notifies the new sending destination received by the sending destination entry receiving unit 453 to the electronic advertisement distribution server 20 by controlling the communication unit 401. The sending destination receiving unit 254 of the electronic advertisement distribution server 20 receives the sending destination notified here.
The communication unit 401 and the control unit 409 work in cooperation to function as the sending destination notifying unit 454.

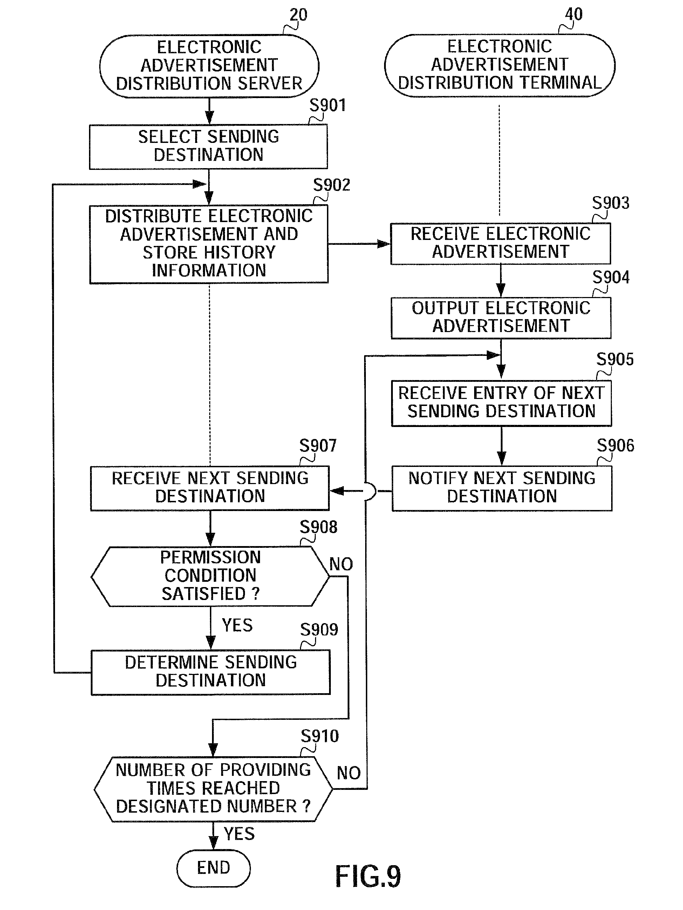

Next, for facilitating better understanding of the present embodiment, the scheme of interactive operation between the electronic advertisement distribution server 20 and the electronic advertisement distribution terminal 40 will be explained with the use of Fig. 9.

First, the terminal selecting unit 252 of the electronic advertisement distribution server 20 refers to the terminal list 292 to select the first sending destination for an electronic advertisement (step S901). In the present embodiment, the terminal selecting unit 252 refers to the terminal list 292 and randomly selects the first sending destination. Here, the terminal selecting unit 252 may refer to the history information 291 to select the sending destination for the electronic advertisement. For example, the terminal selecting unit 252 may select an electronic advertisement distribution terminal 40 to which few electronic advertisements have been distributed in the past as the first sending destination. Further, for example, the terminal selecting unit 252 may select a user (or an electronic advertisement distribution terminal 40) who has presented more referrals in the past as the first sending destination.

The electronic advertisement distribution unit 253 of the electronic advertisement distribution server 20 distributes the electronic advertisement to the sending destination selected by the terminal selecting unit 252, and stores history information 291 that indicates that the electronic advertisement has been distributed to this sending destination (step S902). In the present embodiment, the electronic advertisement distribution unit 253 instructs the e-mail server 30 to send the electronic advertisement by attaching it to an e-mail to the sending destination. In accordance with the instruction, the e-mail server 30 sends an e-mail to which the electronic advertisement is attached to the instructed sending destination.

On the other hand, the electronic advertisement receiving unit 451 of the electronic advertisement distribution terminal 40 receives the electronic advertisement distributed by the electronic advertisement distribution unit 253 (step S903).

The output unit 452 of the electronic advertisement distribution terminal 40 outputs the electronic advertisement received by the electronic advertisement receiving unit 451 to the display 452 (step S904). In a case where the electronic advertisement includes sound data, the output unit 452 reproduces the sound data by a predetermined reproduction program and outputs it to the speaker 422. For example, the output unit 452 displays such an advertisement image as shown in Fig. 6 on the display 425.

The sending destination entry receiving unit 453 of the electronic advertisement distribution terminal 40 receives an entry of the next sending designation for the electronic advertisement output at step S904 from the user (step S905). For example, the user enters the next sending destination into the entry box by operating the operation key 424. Alternatively, the electronic advertisement distribution terminal 40 may acquire, by controlling the communication unit 401, a list of sending destinations that are suitable as the next receiver of the distribution of the electronic advertisement (i.e., sending destinations that satisfy the permission condition) from the electronic advertisement distribution server 20, display the list on the display 425, and let the user select an arbitrary sending destination from the list.

The sending destination notifying unit 454 of the electronic advertisement distribution terminal 40 notifies the sending destination received at step S905 to the electronic advertisement distribution server 20 (step S906).

Then, the sending destination receiving unit 254 of the electronic advertisement distribution server 20 receives the sending destination notified by the sending destination notifying unit 454 (step S907).

The permission condition determining unit 255 of the electronic advertisement distribution server 20 determines whether the predetermined permission condition is satisfied or not based on the history information 291 (step S908). For example, the predetermined permission condition is that "the number of times the electronic advertisement has been sent has not yet reached the designated number, and the electronic advertisement has not yet been sent to the new sending destination".

The number of times the electronic advertisement has been sent can be obtained from the number of histories stored as the history information 291. The permission condition determining unit 255 may count the number of sending times for each electronic advertisement and temporarily store the number in the RAM 404 or the like, and may read out the temporarily stored number.

In a case where it is determined that the permission condition is satisfied (step S908; YES), the electronic advertisement distribution unit 253 determines the sending destination received by the sending destination receiving unit 254 as the next sending destination for the electronic advertisement concerned (step S909). Then, returning to step S902, the electronic advertisement distribution unit 253 distributes the electronic advertisement to the next sending destination, and stores an indication that the electronic advertisement has been sent to the next sending destination in the history information 291. The electronic advertisement distribution server 20 and the electronic advertisement distribution terminal 40 repeat the above process of steps S902 through S908.

On the other hand, in a case where it is determined that the permission condition is not satisfied (step S908; NO), the permission condition determining unit 255 determines whether the number of times the electronic advertisement has been distributed has reached the designated number or not (step S910). That is, it determines whether a part of the permission condition that "the number of times the electronic advertisement has been sent has not yet reached the designated number" is satisfied or not.

In a case where the designated number has not been reached (step S910; NO), the electronic advertisement distribution unit 253 requires the electronic advertisement terminal 40 to designate another sending destination. That is, in this case, the electronic advertisement distribution server 20 determines that it is possible to send the electronic advertisement to any other user, because the electronic advertisement has not yet been distributed the number of times designated by the advertiser. The electronic advertisement distribution terminal 40 performs the process of steps S905 to S906 again, while the electronic advertisement distribution server 20 performs the process of steps S907 to S908.

In a case where the designated number has been reached (step S910; YES), the electronic advertisement distribution unit 253 terminates the distribution of this electronic advertisement. That is, the electronic advertisement distribution server 20 determines that the electronic advertisement has already been distributed the number of times designated by the advertiser, and terminates the distribution of the electronic advertisement.

As obvious from the above, since the electronic advertisement distribution server 20 stores history information 291 that indicates a performed distribution of the electronic advertisement and distributes the electronic advertisement to any user (or terminal) that has not yet received a distribution based on the history information 291, it can get more users (or terminals) to know the electronic advertisement and improve the advertising effectiveness. Further, since the next sending destination for the electronic advertisement is proffered by the user to whom the electronic advertisement has been distributed, the electronic advertisement tends to prevail among those who have similarity to the user in age, preference, degree of interest, etc. and the advertisement can target a demographic limited to some degree, further improving the advertising effectiveness. In addition, since the electronic advertisement is distributed only the number of times designated beforehand by the advertiser, the advertiser can save the advertising costs. Since there will occur no such case where the number of times the electronic advertisement is distributed exceeds the designated number, the advertiser can have previous knowledge about the maximum costs required for advertising. The advertiser can acquire statistical information about the product, service, etc. concerned in the electronic advertisement based on the history information 291, and can utilize the statistics for advertising strategy. According to the present embodiment, the electronic advertisement distribution system 10 can distribute an electronic advertisement to the users efficiently.

### (Embodiment 2)

Next, another embodiment of the present invention will be explained. The present embodiment is different from the above embodiment in that the electronic advertisement distribution server 20 not just sends an electronic advertisement but decides whether or not to request a new sending destination to be notified, and the electronic advertisement distribution terminal 40 does or does not notify a new sending destination depending on the content of the notice. A detailed explanation will now be given below but those components that are common to the above embodiment will be denoted by the same reference numerals and will not be explained repetitively.

The electronic advertisement distribution unit 253 of the electronic advertisement distribution server 20 distributes to the electronic advertisement distribution terminal 40 selected by the terminal selecting unit 252, (1) an electronic advertisement, and (2) notification necessary/unnecessary information that specifies whether or not to request notification of a new sending destination, depending on whether the number of times the electronic advertisement has been sent is smaller than the designated number or not. That is, the electronic advertisement distribution unit 253 requests the electronic advertisement distribution terminal 40 to notify a new sending destination if the number of times a given electronic advertisement has been sent does not reach the number designated by the advertiser when the electronic advertisement is sent once more. On the other hand, the electronic advertisement distribution unit 253 does not request the electronic advertisement distribution terminal 40 to notify a new sending destination if the number of times a given electronic advertisement has been sent reaches the number designated by the advertiser when the electronic advertisement is sent once more. In this case, since no new sending destination will be proffered, the electronic advertisement concerned will terminate after being distributed to the next user.

The sending destination receiving unit 254 of the electronic advertisement distribution server 20 receives no sending destination for the electronic advertisement from the electronic advertisement distribution server 20 in a case where it is not requested to notify a new sending destination.

Meanwhile, the electronic advertisement receiving unit 451 of the electronic advertisement distribution terminal 40 receives (1) the distributed electronic advertisement and (2) the notification necessary/unnecessary information from the electronic advertisement distribution server 20.

In a case where the notification necessary/unnecessary information received by the electronic advertisement receiving unit 451 specifies that it is necessary to notify a new sending destination, the sending destination entry receiving unit 453 of the electronic advertisement distribution terminal 40 receives an entry of a new sending destination for the electronic advertisement from the user. On the other hand, in a case where the notification necessary/unnecessary information received by the electronic advertisement receiving unit 451 does not specify that it is requested to notify a new sending destination, the sending destination entry receiving unit 453 can skip receiving an entry of a new sending destination from the user. In a case where the sending destination entry receiving unit 453 does not receive a sending destination from the user, the sending destination notifying unit 454 notifies no sending destination to the electronic advertisement distribution server 20.

Since the workings of the other units are the same as those in the above embodiment, no explanation will be given for them below.

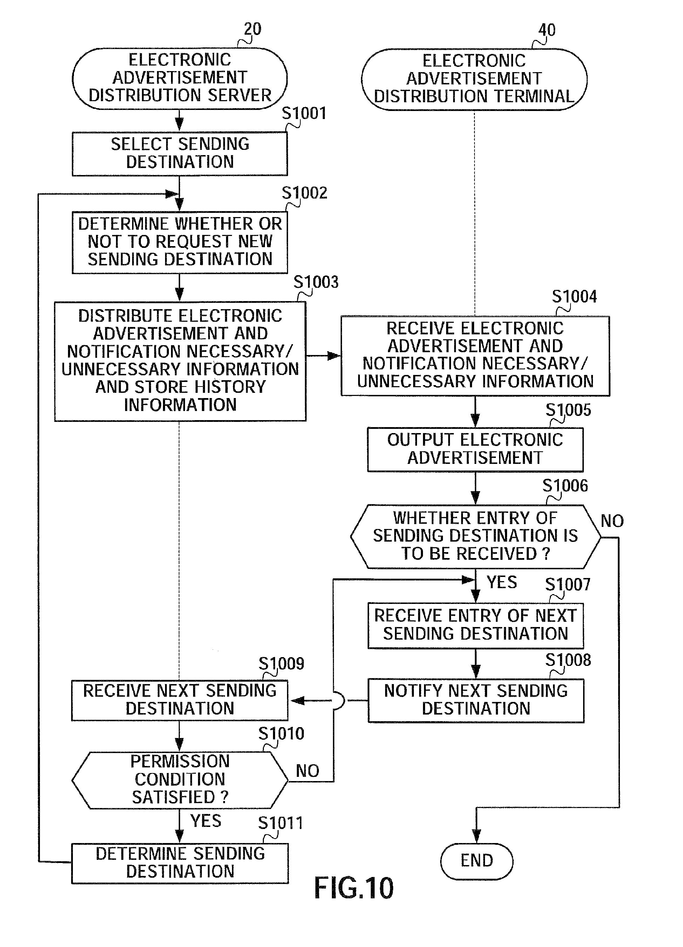

Next, for facilitating better understanding of the present embodiment, the scheme of interactive operation between the electronic advertisement distribution server 20 and the electronic advertisement distribution terminal 40 will be explained with the use of Fig. 10.

First, the terminal selecting unit 252 of the electronic advertisement distribution server 20 refers to the terminal list 292 and selects the first sending destination for an electronic advertisement (step S1001). In the present embodiment, the terminal selecting unit 252 refers to the terminal list 292 and randomly selects the first sending destination.

Here, the terminal selecting unit 252 may select a sending destination for the electronic advertisement by referring to the history information 291. For example, the terminal selecting unit 252 may select an electronic advertisement distribution terminal 40 to which few electronic advertisements have been sent in the past as the first sending destination. Alternatively, for example, the terminal selecting unit 252 may select a user (or an electronic advertisement distribution terminal 40) who has presented more referrals in the past as the first sending destination.

Next, the electronic advertisement distribution unit 253 determines whether or not to request a new sending destination for the electronic advertisement from the electronic advertisement distribution terminal 40 (step S1002). The electronic advertisement distribution unit 253 will request the electronic advertisement distribution terminal 40 to notify a new sending destination if the number of times the electronic advertisement has been sent does not reach the number designated by the advertiser when the electronic advertisement is sent once more. That is, where the number of times designated by the advertiser is N (N being an integer not smaller than 1), the electronic advertisement distribution unit 253 requests a new sending destination to be notified when the number of times the electronic advertisement has been sent is equal to or smaller than N-2. On the other hand, the electronic advertisement distribution unit 253 does not request the electronic advertisement distribution terminal 40 to notify a new sending destination if the number of times the electronic advertisement has been sent reaches the number designated by the advertiser when the electronic advertisement is sent once more. That is, in a case where the number of times the electronic advertisement has been sent is N-1, the electronic advertisement distribution unit 253 does not request a new sending destination to be notified. The electronic advertisement distribution unit 253 generates notification necessary/unnecessary information that indicates the content decided at step S1002. In a case where the number of times designated by the advertiser is 1 (N=1), the electronic advertisement distribution unit 253 always requires no new sending destination.

The electronic advertisement distribution unit 253 distributes the electronic advertisement and the notification necessary/unnecessary information generated at step S1002 to the sending destination, and stores history information 291 that indicates that the electronic advertisement has been distributed to this sending destination (step S1003).

Meanwhile, the electronic advertisement receiving unit 451 of the electronic advertisement distribution terminal 40 receives the electronic advertisement and the notification necessary/unnecessary information distributed by the electronic advertisement distribution unit 253 (step S1004).

The output unit 452 of the electronic advertisement distribution terminal 40 outputs the electronic advertisement received by the electronic advertisement receiving unit 451 on the display 425 (step S1005). In a case where the electronic advertisement includes sound data, the output unit 452 reproduces the sound data by a predetermined reproduction program and outputs it to the speaker 422.

The sending destination entry receiving unit 453 of the electronic advertisement distribution terminal 40 determines whether or not to receive an entry of a sending destination from the user based on the notification necessary/unnecessary information received at step S1004 (step S1006).

In a case where no entry of a sending destination is to be received from the user, i.e., in a case where the notification necessary/unnecessary information specifies that no new sending destination is requested (step S1006; NO), the sending destination entry receiving unit 453 receives no entry of a next sending destination from the user and terminates the process. In this case, the distribution of the electronic advertisement is terminated.

On the other hand, in a case where an entry of a sending destination is to be received from the user, i.e., in a case where the notification necessary/unnecessary information specifies that a new sending destination is requested (step S1006; YES), the sending destination entry receiving unit 453 receives an entry of the next sending destination from the user (step S1007).

Then, the sending destination notifying unit 454 of the electronic advertisement distribution terminal 40 notifies the sending destination received at step S1007 to the electronic advertisement distribution server 20 (step S1008).

The sending destination receiving unit 254 of the electronic advertisement distribution server 20 receives the sending destination notified by the sending destination notifying unit 454 (step S1009).

The permission condition determining unit 255 of the electronic advertisement distribution server 20 determines whether the predetermined permission condition is satisfied or not based on the history information 291 (step S1010). For example, the predetermined permission condition is that "the number of times the electronic advertisement has been sent has not yet reached the designated number, and the electronic advertisement has not yet been sent to the new sending destination".

In a case where it is determined that the permission condition is satisfied (step S1010; YES), the electronic advertisement distribution unit 253 determines the sending destination received by the sending destination receiving unit 254 as the next sending destination for the electronic advertisement concerned (step S1011). Then, returning to step S1002, the electronic advertisement distribution unit determines whether or not to request a yet next sending destination to be notified and generates notification necessary/unnecessary information. The electronic advertisement distribution unit distributes the electronic advertisement and the notification necessary/unnecessary information to the next sending destination, and stores an indication that the electronic advertisement has been sent to this next sending destination as history information 291. The electronic advertisement distribution server 20 and the electronic advertisement distribution terminal 40 repeat the process of steps S1002 through S1010 described above.

On the other hand, in a case where it is determined that the permission condition is not satisfied (step S1010; NO), the permission condition determining unit 255 requests the electronic advertisement distribution terminal 40 to designate another sending destination. That is, in this case, since the electronic advertisement has not yet been distributed the number of times designated by the advertiser, the permission condition determining unit 255 determines that it is possible to send the electronic advertisement to any other user. The electronic advertisement distribution terminal 40 again performs the process of steps S1007 to S1008, while the electronic advertisement distribution server 20 again performs the process of steps S1009 to S1010. In a case
where the number of times the electronic advertisement has been sent has reached the designated number, the notification necessary/unnecessary information generated at step S1002 specifies that no next sending destination needs to be notified, which results in NO at step S1006, and the distribution of the electronic advertisement will thus be terminated.

As obvious from the above, since the electronic advertisement distribution server 20 stores history information 291 that indicates an accomplished distribution of an electronic advertisement, and distributes the electronic advertisement to any user (or terminal) who has not yet received the distribution based on the history information 291, it can get more users (or terminals) to know the electronic advertisement and improve the advertising effectiveness. Further, since the next sending destination for the electronic advertisement is proffered by the user to whom the electronic advertisement has been distributed, the electronic advertisement tends to prevail among those who have similarity to the user in age, preference, degree of interest, etc., and the advertisement can target a demographic that is limited to some degree, further improving the advertising effectiveness. In addition, since the electronic advertisement is distributed only the number of times designated beforehand by the advertiser, the advertiser can save the advertising costs. Since there will occur no such case where the number of times the electronic advertisement is distributed exceeds the designated number, the advertiser can have previous knowledge about the maximum costs required for advertising.

Furthermore, since the electronic advertisement distribution terminal 40 requires the user to enter the next sending destination only when the notification necessary/unnecessary information specifies that the next sending destination needs to be notified, the process performed by the electronic advertisement distribution terminal 40 is simplified and the user can enjoy greater convenience. According to the present embodiment, the electronic advertisement distribution system 10 can distribute an electronic advertisement to the users efficiently.

### (Embodiment 3)

Next, another embodiment of the present invention will be explained. The present embodiment is different from the above embodiments in that the electronic advertisement distribution server 20 sends a referral reception completion notification to the electronic advertisement distribution terminal 40 after it receives a new sending destination from the electronic advertisement distribution terminal 40. A detailed explanation will now be given below but the components that are common to the above embodiments will be denoted by the same reference numerals and will not be explained repetitively.

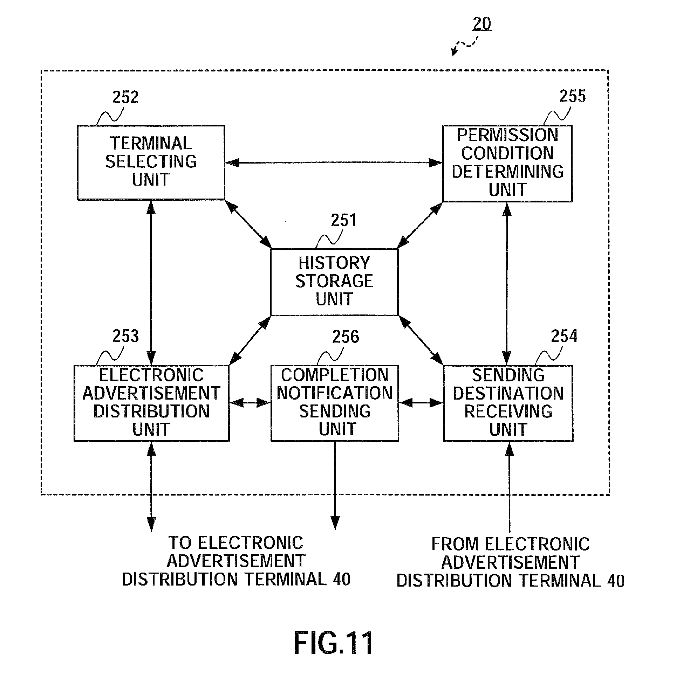

Fig. 11 is a diagram for explaining the process performed by the electronic advertisement distribution server 20. The electronic advertisement distribution server 20 further includes a completion notification sending unit 256.

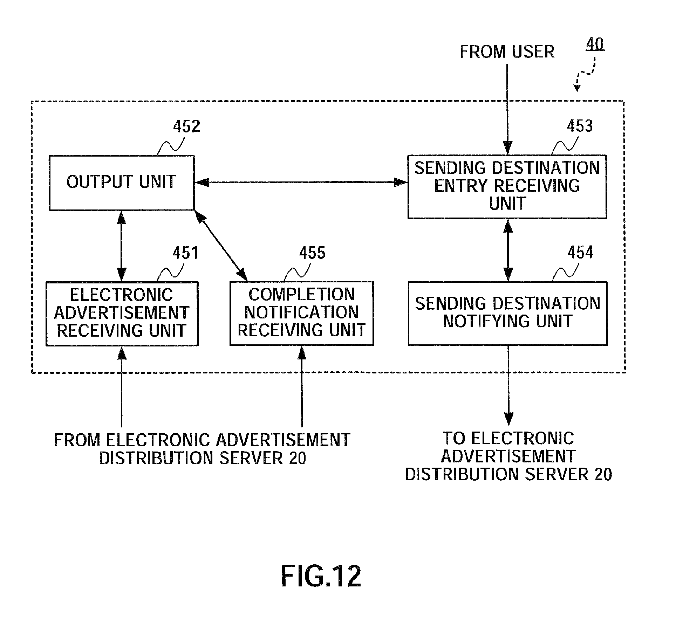

Fig. 12 is a diagram for explaining the process performed by the electronic advertisement distribution terminal 40. The electronic advertisement distribution terminal 40 further includes a completion notification receiving unit 455.

When the sending destination receiving unit 254 receives a new sending destination from an electronic advertisement distribution terminal 40, the completion notification sending unit 256 sends a referral reception completion notification that indicates that the referral to the next sending destination for the electronic advertisement has been received to the electronic advertisement distribution terminal 40 that has notified the sending destination.
The control unit 201 and the communication unit 202 work in cooperation to function as the completion notification sending unit 256.

Meanwhile, the completion notification receiving unit 455 receives the referral reception completion notification from the electronic advertisement distribution server 20. The received referral reception completion notification is input to the output unit 452, and the output unit 452 outputs information indicating that the electronic advertisement distribution server 20 has received the referral to the next sending destination to the display 425, etc. In a case where the referral reception completion notification includes sound data, the output unit 452 may reproduce the sound data and output it to the speaker 422.
The communication unit 401 and the control unit 409 work in cooperation to function as the completion notification receiving unit 455.

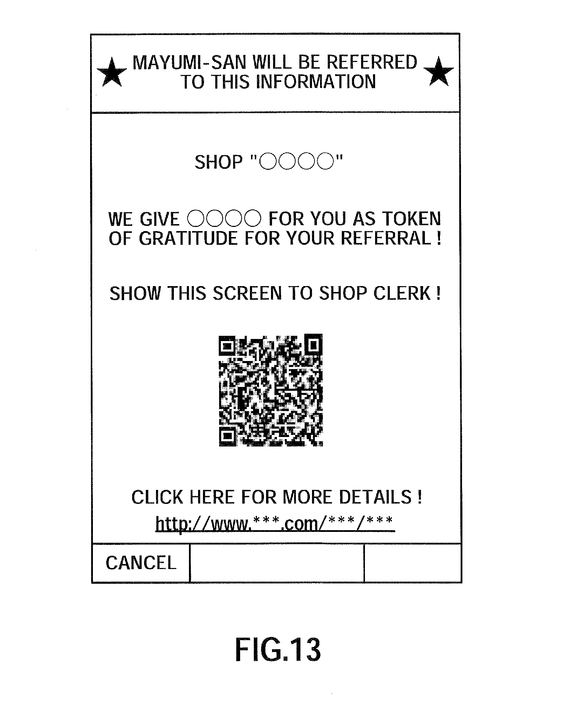

The information that indicates that the referral to the next sending destination has been received can be affixed with various information. Fig. 13 is an example of a screen view the output unit 452 displays on the display 425 based on the referral reception completion notification received by the completion notification receiving unit 455. By including the proffered next sending destination such as the nickname of the referral, etc. in the referral reception completion notification, it is possible to display that "Mayumi-san will be referred to this information", for example. Further, it is possible to distribute the user with not only the information indicating that the referral to the sending destination has been received, but also an additional benefit in return for the referral proffer. For example, the referral reception completion notification may further include text data, image data, etc. that indicate information such as "We give xxxxx for you as a token of gratitude for your referral!". Then, when the service distributor (or the advertiser) is notified that the user has received the referral reception completion notification, the service distributor (or the advertiser) distributes the additional benefit to the user who has received the referral reception completion notification.

As known from the above, the completion notification sending unit 256 can send various information to the electronic advertisement distribution terminal 40 as the referral reception completion notification, and the completion notification receiving unit 455 can receive various information from the electronic advertisement distribution terminal 40 as the referral reception completion notification. The content of the referral reception completion notification described in the present embodiment and the screen shown in Fig. 13 are both a mere example, and can be changed arbitrarily, needless to say.

According to the present embodiment, the advertiser can distribute an electronic advertisement efficiently to a client demographic that can be expected to return advertising effectiveness. Further, since the user can receive the provision of an additional benefit in return for his/her referral to a sending destination (passing-on destination) for the electronic advertisement, it is possible to expect an effect that the user would proactively transmit the electronic advertisement, and the advertiser can be confident about a greater advertising effectiveness.

The present embodiment can be easily combined with the other embodiments described above.
For example, the present embodiment can be combined with the embodiment 1. In this case, when the sending destination receiving unit 254 receives a sending destination notified by the sending destination notifying unit 454 at step S907 of Fig. 9, the completion notification sending unit 256 sends a referral reception completion notification to the electronic advertisement distribution terminal 40, and performs the process from step S908. Then, the completion notification receiving unit 455 receives the referral reception completion notification from the electronic advertisement distribution terminal 40. Further, the output unit 452 displays such a screen view as shown in Fig. 13 on the display 425 based on the received referral reception completion notification. The user can receive the provision of the additional benefit by showing the displayed screen to a shop clerk or by reading the screen by a predetermined reading device. The processes of the other steps are the same as those of the embodiment 1 and will thus not be explained repetitively.

For example, the present embodiment can be combined with the embodiment 2. In this case, when the sending destination receiving unit 254 receives a sending destination notified by the sending destination notifying unit 454 at step S1009 of Fig. 10, the completion notification sending unit 256 sends a referral reception completion notification to the electronic advertisement distribution terminal 40 and performs the process from step S1010. Then, the completion notification receiving unit 455 receives the referral reception completion notification from the electronic advertisement distribution terminal 40. Further, the output unit 452 displays such a screen view as shown in Fig. 13 on the display 425 based on the received referral reception completion notification. The user can receive the provision of the additional benefit by showing the displayed screen to a shop clerk or by reading the screen by a predetermined reading device. The processes of the other steps are the same as those of the embodiment 2 and will thus not be explained repetitively.

### (Embodiment 4)

Next, another embodiment of the present invention will be explained. The present embodiment is a modified example of the embodiment 3. After the electronic advertisement distribution server 20 distributes an electronic advertisement to a new sending destination, it sends a referral reception completion notification to the electronic advertisement distribution terminal 40 that has proffered the sending destination (i.e., the profferer). The referral reception completion notification is sent to the electronic advertisement distribution terminal 40 that has proffered a new sending destination (the profferer), after the user presents a new sending destination and then the electronic advertisement is delivered to that new sending destination. The configuration of each unit of the electronic advertisement distribution server 20 and the electronic advertisement distribution terminal 40 is the same as in the embodiment 3, these units will thus be denoted by the same reference numerals and will not be explained repetitively.

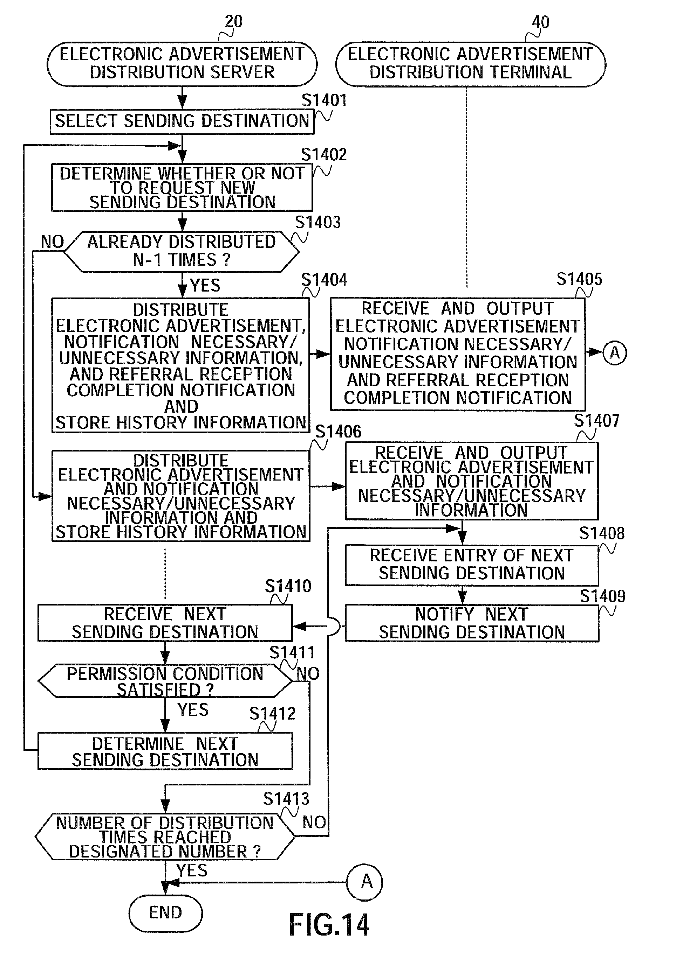

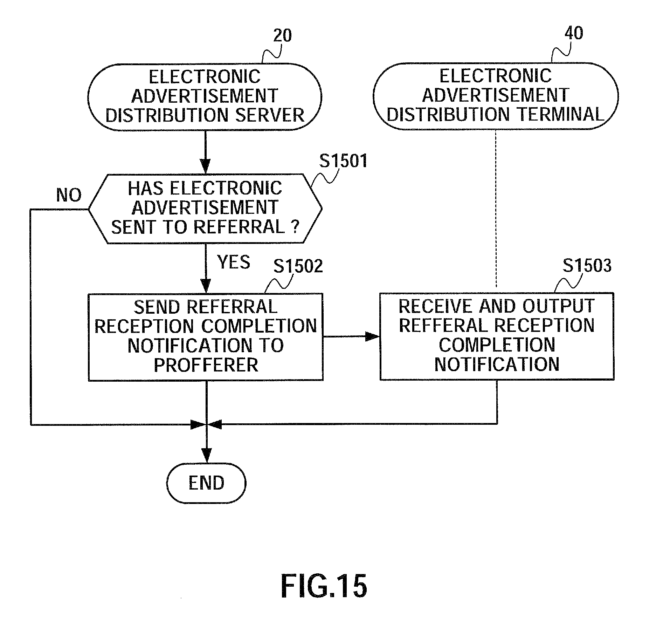

Fig. 14 and Fig. 15 are diagrams for explaining the scheme of interactive operation between the electronic advertisement distribution server 20 and the electronic advertisement distribution terminal 40. In the present embodiment, the electronic advertisement will be distributed N times designated by the advertiser.

First, the terminal selecting unit 252 of the electronic advertisement distribution server 20 refers to the terminal list 292 to select the first sending destination for the electronic advertisement (step S1401). For example, the terminal selecting unit 252 refers to the terminal list 292 and randomly selects the first sending destination.

Next, the electronic advertisement distribution unit 253 determines whether or not to request a new sending destination for the electronic advertisement from the electronic advertisement distribution terminal 40 (step S1402). The electronic advertisement distribution unit 253 will request the electronic advertisement distribution terminal 40 to notify a new sending destination if the number of times the electronic advertisement has been sent does not reach the number (N times) designated by the advertiser when the electronic advertisement is sent once more. On the contrary, if the number of times the electronic advertisement has been sent reaches the number (N times) designated by the advertiser when the electronic advertisement is sent once more, the electronic advertisement distribution unit 253 will not request the electronic advertisement distribution terminal 40 to notify a new sending destination. The electronic advertisement distribution unit 253 generates notification necessary/unnecessary information that indicates the content determined at step S 1402.

The electronic advertisement distribution unit 253 determines whether the number of times the electronic advertisement has been distributed is N-1 or not (step S1403).

In a case where the electronic advertisement has already been sent N-1 times, i.e., in a case where the number of times the electronic advertisement has been sent becomes N when the electronic advertisement is sent once more (step S1403; YES), the electronic advertisement distribution unit 253 distributes (1) the electronic advertisement, (2) the notification necessary/unnecessary information, and (3) referral reception completion notification to the electronic advertisement distribution terminal 40, and stores history information 291 indicating that the electronic advertisement has been distributed to this sending destination (step S1404). In this case, the notification necessary/unnecessary information specifies that the electronic advertisement distribution terminal 40 needs not notify a new sending destination.

Then, the electronic advertisement receiving unit 451 of the electronic advertisement distribution terminal 40 receives the electronic advertisement, the notification necessary/unnecessary information, and the referral reception completion notification, and the output unit 452 outputs these information (step S1405).

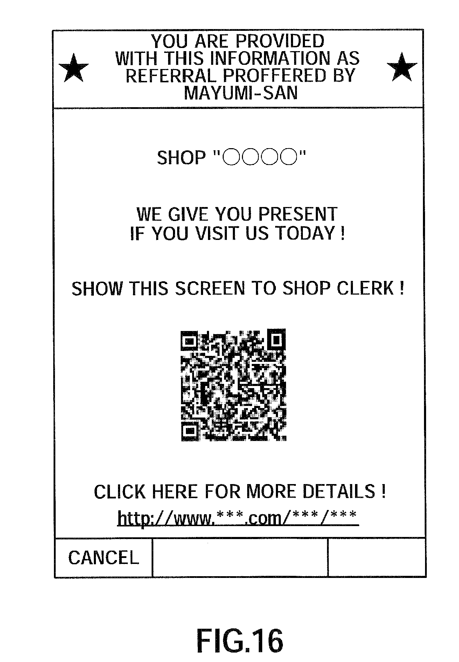

For example, the output unit 452 displays such a screen view as shown in Fig. 16 that includes the electronic advertisement on the display 425. In a case where the electronic advertisement includes sound data, the output unit 452 reproduces the sound data by a predetermined reproduction program and outputs it to the speaker 422. Since the notification necessary/unnecessary information specifies that the electronic advertisement distribution terminal 40 needs not notify a new sending destination, the sending destination entry receiving unit 453 can skip receiving an entry of a new sending destination from the user. The distribution of this electronic advertisement ends as the number of times the electronic advertisement has been distributed is N times.

On the other hand, in a case where the electronic advertisement has not been sent N-1 times, i.e., in a case where the number of times the electronic advertisement has been sent does not reach N times when the electronic advertisement is sent once more (step S1403; NO), the electronic advertisement distribution unit 253 distributes (1) the electronic advertisement and (2) notification necessary/unnecessary information to the electronic advertisement distribution terminal 40, and stores history information 291 that indicates that the electronic advertisement has been distributed to this sending destination (step S1406). In this case, the notification necessary/unnecessary information specifies that the electronic advertisement distribution terminal 40 needs to notify a new sending destination.

Then, the electronic advertisement receiving unit 451 of the electronic advertisement distribution terminal 40 receives the electronic advertisement and the notification necessary/unnecessary information, and the output unit 452 outputs these information (step S1407). For example, the output unit 452 displays such a screen view as shown in Fig. 6 that includes the electronic advertisement on the display 425. In a case where the electronic advertisement includes sound data, the output unit 452 reproduces the sound data by a predetermined reproduction program and outputs it to the speaker 422.

The sending destination entry receiving unit 453 of the electronic advertisement distribution terminal 40 receives an entry of the next sending destination for the electronic advertisement from the user (step S 1408). For example, the user enters the next sending destination into the entry box by operating the operation key 424. Alternatively, the electronic advertisement distribution terminal 40 may acquire, by controlling the communication unit 401, a list of sending destinations that are suitable as the next receiver of the distribution of the electronic advertisement (i.e., sending destinations that satisfy a permission condition) from the electronic advertisement distribution server 20 and displays the list on the display 425 so that the user may select an arbitrary sending destination from the list.

The sending destination notifying unit 454 of the electronic advertisement distribution terminal 40 notifies the sending destination received at step S1408 to the electronic advertisement distribution server 20 (step S1409).

Then, the sending destination receiving unit 254 of the electronic advertisement distribution server 20 receives the sending destination notified by the sending destination notifying unit 454 (step S 1410).

The permission condition determining unit 255 of the electronic advertisement distribution server 20 determines whether a predetermined permission condition is satisfied or not based on the history information 291 (strep S1411). For example, the predetermined permission condition is that "the number of times the electronic advertisement has been sent has not yet reached the designated number, and the electronic advertisement has not yet been sent to the new sending destination".

In a case where it is determined that the permission condition is satisfied (step S1411; YES), the electronic advertisement distribution unit 253 determines the sending destination received by the sending destination receiving unit 254 as the next sending destination for the electronic advertisement (step S1412). Then, returning to step S1402, the electronic advertisement distribution unit 253 distributes the electronic advertisement to the next sending destination, and stores an indication that the electronic advertisement has been sent to this next sending destination as history information 291. The electronic advertisement distribution server 20 and the electronic advertisement distribution terminal 40 repeat the process of steps S1402 through S1411 described above.

On the other hand, in a case where it is determined that the permission condition is not satisfied (step S1411; NO), the permission condition determining unit 255 determines whether the number of times the electronic advertisement has been distributed has reached the designated number or not (step S 1413). That is, the permission condition determining unit 255 determines whether part of the permission condition that "the number of times the electronic advertisement has been sent has not yet reached the designated number" is satisfied or not.

In a case where the designated number has been reached (step S1413; YES), the electronic advertisement distribution unit 253 terminates the distribution of this electronic advertisement. That is, the electronic advertisement distribution server 20 determines that the electronic advertisement has already been sent the number of times designated by the advertiser, and terminates the distribution of this electronic advertisement.

In a case where the designated number has not been reached (step S1413; NO), the electronic advertisement distribution unit 253 requests the electronic advertisement distribution terminal 40 to designate another sending destination. That is, in this case, the electronic advertisement distribution server 20 determines that the electronic advertisement can still be sent to another user because the electronic advertisement has not yet been distributed the number of times designated by the advertiser. The electronic advertisement distribution terminal 40 again performs the process of steps S1408 to S1409, and the electronic advertisement distribution server 20 again performs the process of steps S1410 to S1411.

Then, when the electronic advertisement has been sent to the new sending destination (step S1501; YES), the completion notification sending unit 256 of the electronic advertisement distribution server 20 sends referral reception completion notification to the profferer electronic advertisement distribution terminal 40 (step S1502).

The completion notification receiving unit 455 of the electronic advertisement distribution terminal 40 receives the referral reception completion notification from the electronic advertisement distribution server 20, and the output unit 452 outputs information including the content of the referral reception completion notification (step S1503). For example, the output unit 452 displays such a screen view as shown in Fig. 13 on the display 425. In a case where the referral reception completion notification includes sound data, the output unit 452 reproduces the sound data by a predetermined reproduction program and outputs it to the speaker 422.

In a case where the electronic advertisement has not been sent to the new sending destination (step S1501; NO), the completion notification sending unit 256 does not send the referral reception completion notification to the profferer electronic advertisement distribution terminal 40.

In this way, the present embodiment improves the advertising effectiveness by changing the timing at which the referral reception completion notification is sent and the content of the referral reception completion notification depending on the number of times the electronic advertisement has been distributed. In the present embodiment too, since the electronic advertisement distribution server 20 stores history information 291 indicating a performed distribution of the electronic advertisement and distributes the electronic advertisement to any user (or terminal) who has not yet received the distribution based on the history information 291, it can get more users (or terminals) to know the electronic advertisement. Since the next sending destination for the electronic advertisement is proffered by the user to whom the electronic advertisement has been distributed, the electronic advertisement tends to prevail among those who have similarity to the user in age, preference, degree of interest, etc. and the advertisement can target a demographic that is limited to some degree, further improving the advertising effectiveness. In addition, since the electronic advertisement is distributed only the number of times designated beforehand by the advertiser, the advertiser can save the advertising costs. Since there will occur no such case where the number of times the electronic advertisement is distributed exceeds the designated number, the advertiser can have previous knowledge about the maximum costs required for advertising. According to the present embodiment, the electronic advertisement distribution system 10 can distribute an electronic advertisement to the users efficiently.

### (Embodiment 5)

Next, another embodiment of the present embodiment will be explained. The present embodiment is different from the above embodiments in that when the number of times an electronic advertisement has been sent has reached the number designated by the advertiser, the electronic advertisement distribution server 20 can query the advertiser and update the designated number. A detailed explanation will now be given, but those components that are the same as those in the above embodiments will be denoted by the same reference numerals and will not be explained repetitively.

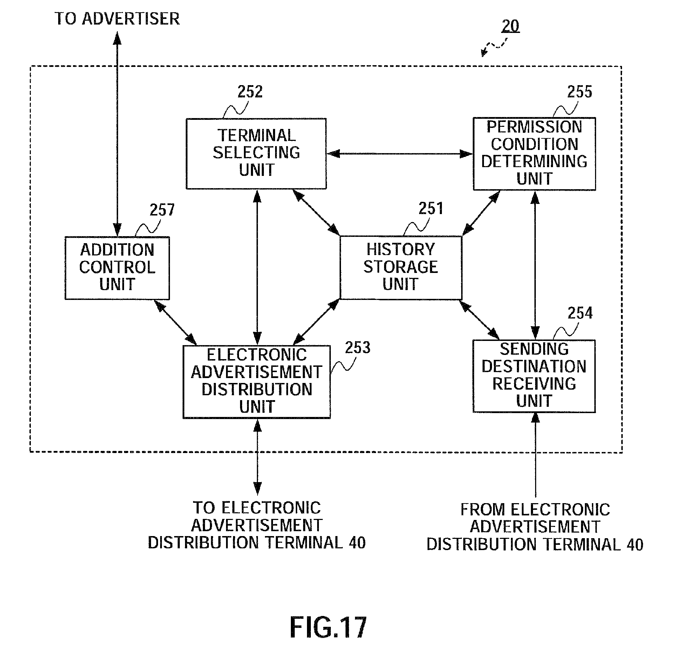

Fig. 17 is a diagram for explaining the process performed by the electronic advertisement distribution server 20. The electronic advertisement distribution server 20 further includes an addition control unit 257.

The addition control unit 257 queries the advertiser of an electronic advertisement about whether to increase the number of times the electronic advertisement is distributed, when it is determined, while the predetermined permission condition is not satisfied, that the number of times the electronic advertisement has been sent has reached the number (for example, N times) designated by the advertiser. Then, the addition control unit 257 performs control so that an entry of addition information that indicates the number of times (for example, M times) to be added is received and the designated number is updated based on the addition information. N and M are both integers not smaller than 1.
The control unit 201, the communication unit 202, and the storage unit 203 work in cooperation to function as the addition control unit 257.

In the present embodiment, the advertiser has an advertiser server (unillustrated) that, in response to the query from the electronic advertisement distribution server 20, determines whether or not to increase the number of times to distribute the electronic advertisement, decides the number of times to be added, generates addition information that indicates the decided additional times, and notifies the generated addition information to the electronic advertisement distribution server 20. The advertiser server is connected to the communication network 60.

The advertiser server includes a control unit, a communication unit, and a storage unit. The advertiser server is constituted by an information processing apparatus such as mainframe, workstation, etc. The control unit is constituted by a CPU and the like, and controls each unit of the advertiser server in accordance with an Operating System (OS), programs, etc. that are stored in the storage unit. The communication unit is constituted by predetermined communication devices such as an NIC, a router, a modem, etc. The communication unit communicates with the electronic advertisement distribution server 20, etc. connected to the communication network 60 under the control of the control unit. The storage unit is constituted by a storage device such as a RAM or the like that distributes a work area, and a storage device such as a hard disk device, a ROM, or the like. For example, the storage unit stores information that indicates the number of times an electronic advertisement is distributed (hereinafter referred to as "distribution quota information 293"), etc. in addition to the programs and OS for controlling the entire advertiser server.

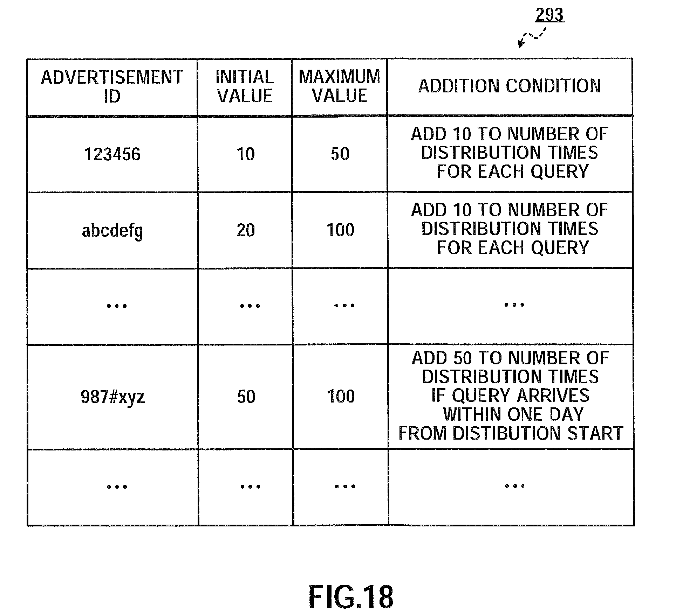

Fig. 18 is an example of the distribution quota information 293 stored in the storage unit of the advertiser server. Advertisement ID is identical with advertisement ID stored in the history information 291, and is identification information by which the electronic advertisement is identified that is represented by numerals, characters, symbols, etc. Initial value indicates the initial value of the number of times the electronic advertisement will be distributed that is designated by the advertiser when starting the distribution. Maximum value shows the upper limit value up to which the number of times to distribute can be increased. Addition condition teaches the rule applied when the number of times to distribute is increased. For example, the diagram shows that the distribution of the electronic advertisement having an advertisement ID "123456" starts with an initial value of "10 times", to which 10 times will be added for each query from the electronic advertisement distribution server 20 after once the number of times of distribution has reached 10 times. The maximum number of times to distribute is limited to "50 times". This diagram is a mere example, and may include only part of the above information or may include other information in addition to the above information. It is only necessary for the distribution quota information 293 stored in the storage unit to be such information by which it is possible to determine the number of times to distribute for each electronic advertisement separately. It is also possible that a fixed addition amount should be set beforehand that is applicable to every electronic advertisement and that the number of times to distribute should be increased by only this fixed addition amount. The electronic advertisement distribution server 20 may act as the advertiser server.

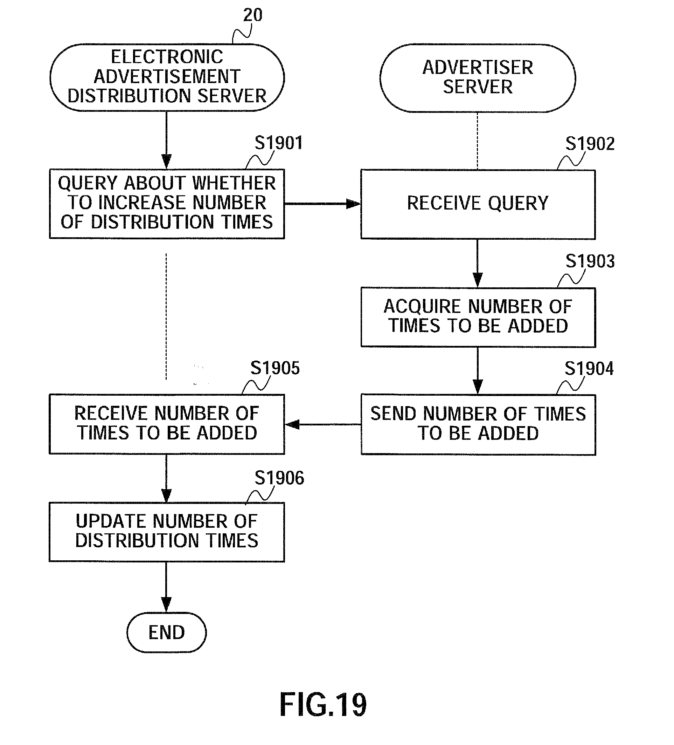

Fig. 19 is a diagram for explaining a process (hereinafter referred to as "addition control process") that is performed by the electronic advertisement distribution server 20 and the advertiser server. For example, the addition control unit 257 starts the addition control process when step S908 results in NO or at step S1002 to update the number of times to distribute the electronic advertisement.

First, the addition control unit 257 of the electronic advertisement distribution server 20 queries the advertiser server of the electronic advertisement about whether to increase the number of times to distribute (step S1901).

Next, the advertiser server receives the query from the electronic advertisement distribution server 20 about whether or not to increase the number of times to distribute the electronic advertisement (step S1902). The advertiser server refers to the distribution quota information 293 to determine whether or not to increase the number of times to distribute, and acquires the number of times to be added (step S1903). In a case where the addition condition in the distribution quota information 293 is not satisfied, the number of times to be added is 0 time. The advertiser server sends the acquired number of times to be added to the electronic advertisement distribution server 20 (step S1904).

Then, the addition control unit 257 of the electronic advertisement distribution server 20 receives the number of times to be added from the advertiser server (step S1905). The addition control unit 257 adds the number of times to be added to the number of times that has been designated by the advertiser (the number of times to distribute the electronic advertisement that is currently set) to update the number of times to distribute (step S 1906). The number of times to distribute thus updated will be a new "number of times designated by the advertiser".

In a case where the addition control process is performed when step S908 results in NO, the process of step S908 is again performed after the addition control process is completed and a number of times to distribute is updated to a new number of times. In a case where the number of times to be added is 0 time due to some reason such as that the number of times of distribution has reached the maximum value, the flow goes to step S910.

In a case where the addition control process is performed at step S1002, the process of step S1002 is again performed after the addition control process is completed and a number of times to distribute is updated to a new number of times. In a case
where the number of times to be added is 0 time due to some reason such as that the number of times of distribution has reached the maximum value, the flow goes to step S1003.

In the present embodiment, update is by performing addition operation to the number of times to distribute the electronic advertisement. However, this is not binding, but update may be by any arbitrary operation. For example, the advertiser can easily change the content of the advertisement when the subject product or service of the electronic advertisement is changed, sold out, or suspended from being distributed. According to the present embodiment, the advertiser can easily change the number of times to distribute the electronic advertisement in response to the level of publicity attained by the electronic advertisement and efficiently distribute the electronic advertisement.

### (Embodiment 6)

Next, another embodiment of the present invention will be explained. The present embodiment is different from the above embodiments in that the electronic advertisement distribution server 20 selects a next sending destination in a case where, while a predetermined permission condition is not satisfied, the electronic advertisement has already been sent to a new sending destination. A detailed explanation will now be given below, but those components that are common to the above embodiments will be denoted by the same reference numerals and will not be explained repetitively.

In a case where it is determined, while a permission condition is not satisfied, that the electronic advertisement has already been sent to a new sending destination that is notified by the electronic advertisement distribution terminal 40, the terminal selecting unit 252 selects a yet new sending destination randomly from the electronic advertisement distribution terminals 40 in the electronic advertisement distribution system 10. For example, the predetermined permission condition is, likewise in the above embodiments, that "the number of times the electronic advertisement has been sent has not yet reached the designated number, and the electronic advertisement has not yet been sent to the new sending destination".

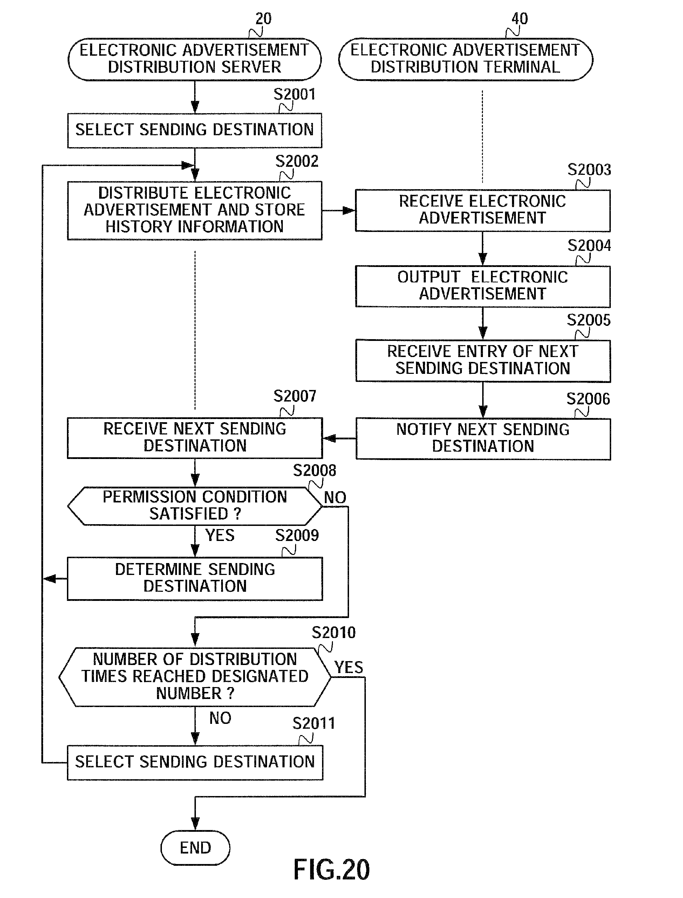

Fig. 20 is a diagram for explaining the scheme of interactive operation between the electronic advertisement distribution server 20 and the electronic advertisement distribution terminal 40. The processes performed at steps S2001 through S2009 are the same as the processes performed at steps S901 through S909 in the above embodiment respectively and will not thus be explained repetitively, and steps after step S2010 will be explained below.

In a case where the permission condition is not satisfied at step S2008 (step S2008; NO), the permission condition determining unit 255 determines whether the number of times the electronic advertisement has been distributed has reached the designated number or not (step S2010). That is, the permission condition determining unit 255 determines whether part of the permission condition that "the number of times the electronic advertisement has been sent has not yet reached the designated number" is satisfied or not.

In a case where the designated number has been reached (step S2010; YES), the electronic advertisement distribution unit 253 terminates the distribution of this electronic advertisement. That is, the electronic advertisement distribution server 20 determines that the electronic advertisement has already been distributed the number of times designated by the advertiser, and terminates the distribution of the electronic advertisement.

In a case where the designated number has not yet been reached (step S2010; NO), the electronic advertisement distribution unit 253 notifies not to the electronic advertisement distribution terminal 40 but to the terminal selecting unit 252 that any other sending destination should be selected. The terminal selecting unit 252 refers to the history information 291 and the terminal list 292 to select a new sending destination that satisfies the permission condition (step S2011). For example, the terminal selecting unit 252 randomly selects any electronic advertisement distribution terminal 40 that satisfies the permission condition. Then, returning to step S2002, the electronic advertisement distribution server 20 and the electronic advertisement distribution terminal 40 repeat the process.

The terminal selecting unit 252 may select an electronic advertisement distribution terminal 40 to which few number of electronic advertisements have been distributed in the past as a new sending destination. Alternatively, the terminal selecting unit 252 may select any user (or electronic advertisement distribution terminal 40) who has presented more referrals in the past as a new sending destination. The advertiser can select a user or a terminal from which a greater advertising effectiveness is expected. The selecting manner described here is a mere example, and another selecting manner may be employed.

In a case where the sending destination notified by the electronic advertisement distribution terminal 40 does not satisfy the permission condition, it is preferable that the electronic advertisement distribution unit 253 should notify the electronic advertisement distribution terminal 40 to that effect.

As can be known, according to the present embodiment, the electronic advertisement distribution system 10 can select a new sending destination that satisfies the permission condition when the sending destination proffered by the user does not satisfy the permission condition, without bothering the user. The advertiser can distribute the electronic advertisement efficiently.

### (Embodiment 7)

Next, another embodiment of the present invention will be explained. The present embodiment is different from the above embodiments in that the sending destinations can be restricted based on the current positions of the electronic advertisement distribution terminals 40. A detailed explanation will now be given below, but those components that are common to the above embodiments will be denoted by the same reference numerals and will not be explained repetitively.

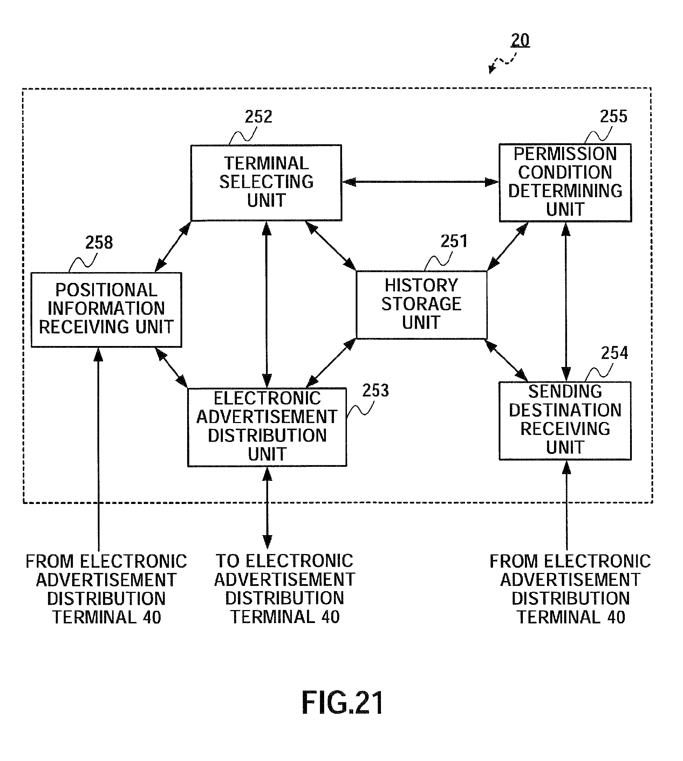

Fig. 21 is a diagram for explaining the process performed by the electronic advertisement distribution server 20. The electronic advertisement distribution server 20 further includes a positional information receiving unit 258.

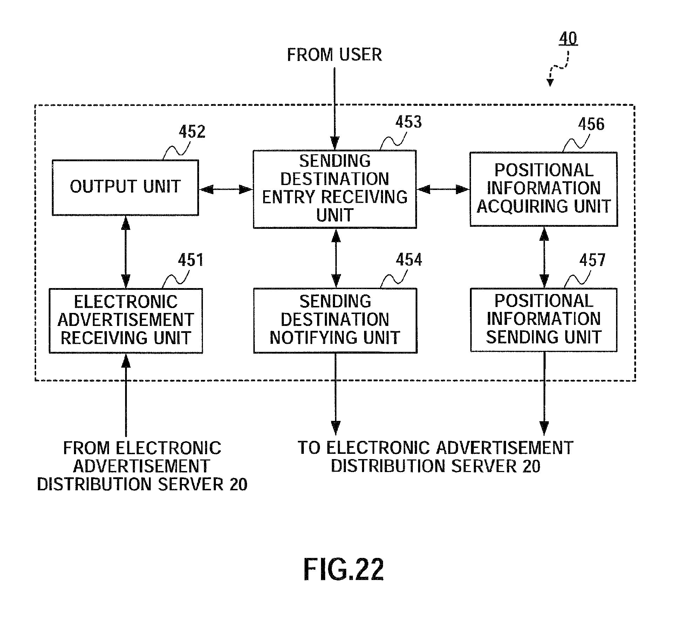

Fig. 22 is a diagram for explaining the process performed by the electronic advertisement distribution terminal 40. The electronic advertisement distribution terminal 40 further includes a positional information acquiring unit 456 and a positional information sending unit 457.

In the present embodiment, area information is designated for the electronic advertisement by the advertiser. Area information is used when the electronic advertisement is distributed, and the electronic advertisement distribution unit 253 distributes the electronic advertisement to an electronic advertisement distribution terminal 40 that is currently located in the area specified by the area information. In other words, the electronic advertisement is not to be distributed to any electronic advertisement distribution terminal 40 that is not currently located in the area specified by the area information. Generally, an advertiser cannot expect a great advertising effectiveness by randomly distributing the electronic advertisement to any electronic advertisement distribution terminal 40. It is favorable to the advertiser that the electronic advertisement be distributed in a way to fascinate more of the users who receive the electronic advertisement. Hence, the advertiser presets area information to the electronic advertisement that specifies a target area to which the electronic advertisement will be distributed.

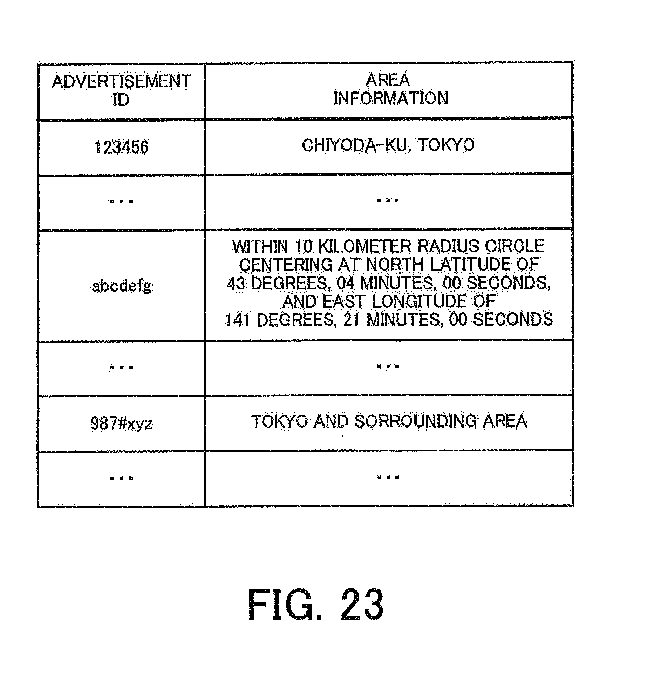

Fig. 23 is an example of the area information. Advertisement ID is identification information by which the electronic advertisement is identified likewise in the history information 291, and represented by numerals, characters, symbols, etc. For example, area information "Chiyoda-ku, Tokyo" is set for the electronic advertisement having an advertisement ID "123456". In this case, the electronic advertisement having the advertisement ID "123456" will be distributed to any electronic advertisement distribution terminal 40 that is located in "Chiyoda-ku, Tokyo". This diagram is a mere example, and may include only part of the above information or may store other information in addition to the above information.

The positional information acquiring unit 456 of the electronic advertisement distribution terminal 40 acquires the current positional information of the electronic advertisement distribution terminal 40. For example, the positional information acquiring unit 456 acquires, from a wireless base station 50 that is currently caught by the electronic advertisement distribution terminal 40, information by which the wireless base station 50 can be identified. The positional information acquiring unit 456 may exchange information with a GPS satellite, and acquire the positional coordinates of the electronic advertisement distribution terminal 40 as latitude/longitude information. Further alternatively, the positional information acquiring unit 456 may acquire information by which it is possible to identify the access point that is used by the electronic advertisement distribution terminal 40 for connecting to the communication network 60.
The communication unit 401 and the control unit 409 work in cooperation to function as the positional information acquiring unit 456.

The positional information sending unit 457 of the electronic advertisement distribution terminal 40 sends the positional information acquired by the positional information acquiring unit 456 to the electronic advertisement distribution server 20.
The communication unit 401 and the control unit 409 work in cooperation to function as the positional information sending unit 457.

The positional information receiving unit 258 of the electronic advertisement distribution server 20 receives the positional information from the electronic advertisement distribution terminal 40. The received positional information is stored in the storage unit 203 in association with the information by which the electronic advertisement distribution terminal 40 can be identified.

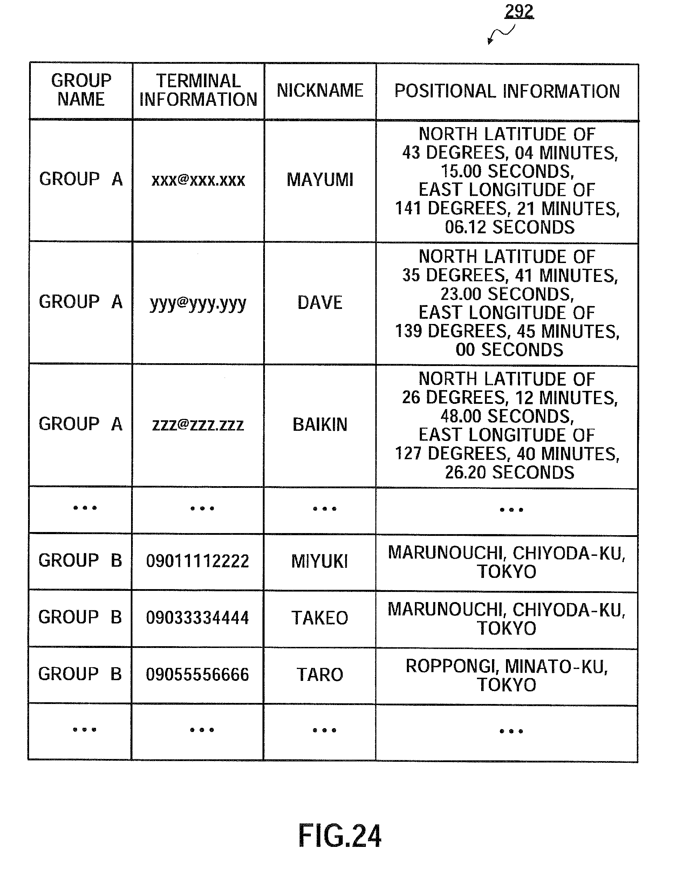

For example, Fig. 24 is an example of the terminal list 292 described above that additionally stores the positional information. This diagram is a mere example, and may include only part of these information or may store other information in addition to these information.
The communication unit 202 and the control unit 201 work in cooperation to function as the positional information receiving unit 258.

The terminal selecting unit 252 of the electronic advertisement distribution server 20 selects an electronic advertisement distribution terminal 40 that is to be the sending destination from the electronic advertisement distribution terminals 40 that are located in the area specified by the area information. For example, assume that the area information is as shown in Fig. 23, and the positional information is as shown in Fig. 24. The terminal selecting unit 252 selects an electronic advertisement distribution terminal 40 that is located in "Chiyoda-ku, Tokyo" in a case where the electronic advertisement distribution unit 253 is to distribute the electronic advertisement having the advertisement ID "123456". As a result, the electronic advertisement having the advertisement ID "123456" is distributed to "Miyuki", "Takeo", and "Dave". Note that the positional information "north latitude of 35 degrees, 41 minutes, 23.00 seconds, and east longitude of 139 degree, 45 minutes, 00.00 seconds" of "Dave" points to near "Ote-machi, Chiyoda-ku, Tokyo".

The selection of the electronic advertisement distribution terminal 40 to which the electronic advertisement will be distributed may not strictly be based on whether or not the electronic advertisement distribution terminal 40 is within the area specified by the area information. For example, the terminal selecting unit 252 may first preferentially select an electronic advertisement distribution terminal 40 that is located within the area specified by the area information, and then supplementarily select an electronic advertisement distribution terminal 40 that is not located within the area. For example, the terminal selecting unit 252 may randomly select an electronic advertisement distribution terminal 40 by placing a systematic error (weight) such that a larger possibility of being selected is given to any electronic advertisement distribution terminal 40 that is within the area specified by the area information.

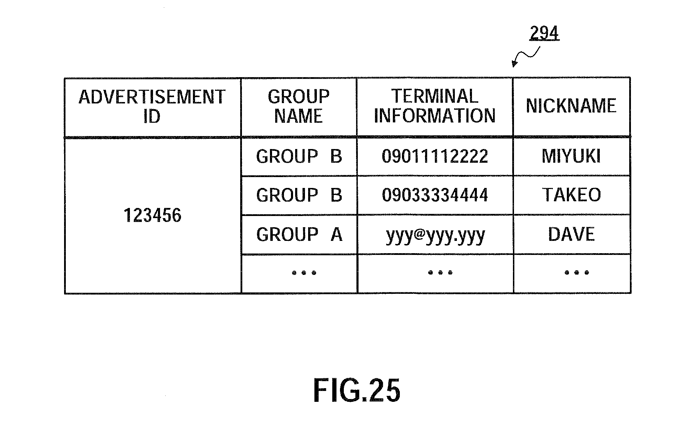

The electronic advertisement distribution unit 253 of the electronic advertisement distribution server 20 distributes a terminal list that are located within the area specified by the area information (the list will hereinafter be referred to as "within-area terminal list 294") to the electronic advertisement distribution terminal 40. The electronic advertisement distribution unit 253 generates the within-area terminal list 294 based on the positional information and area information stored in the storage unit 203, and distributes it to the electronic advertisement distribution terminal 40. Fig. 25 is an example of the within-area terminal list 294. This diagram is a mere example, and may include only part of these information or may include other information in addition to these information.

The electronic advertisement receiving unit 451 receives the within-area terminal list 294 from the electronic advertisement distribution server 20.

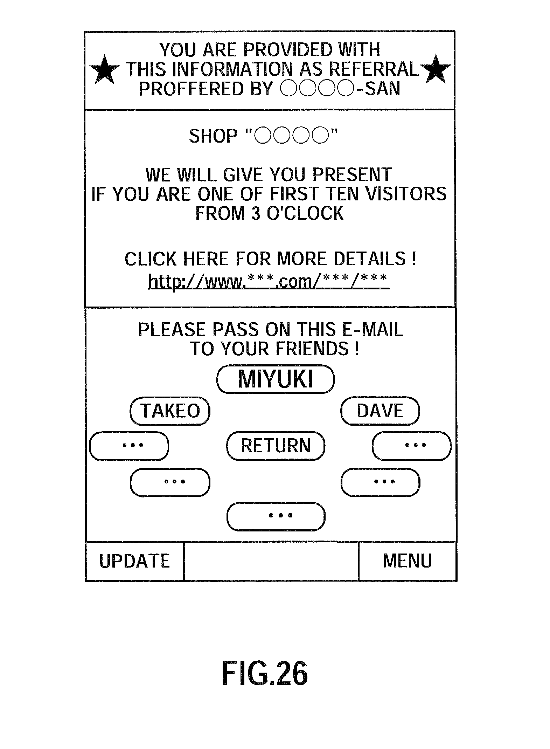

The sending destination entry receiving unit 453 makes the user select any from the within-area terminal list 294 received by the electronic advertisement receiving unit 451 and determines the selected electronic advertisement distribution terminal 40 as a new sending destination. For example, the sending destination entry receiving unit 453 displays such a screen view as shown in Fig. 26 on the display 425 and receives an entry of the next sending destination from the user. The sending destination entry receiving unit 453 displays buttons or the like that are assigned to the terminals (or, user name, nickname, or the like) included in the within-area terminal list 294, and determines a terminal corresponding to any pressed button as the next sending destination. The sending destination notifying unit 454 sends the selected sending destination to the electronic advertisement distribution server 20.

As can be known, according to the present embodiment, the advertiser can distribute the electronic advertisement to a desired electronic advertisement distribution terminal 40. Further, since the user selects any electronic advertisement distribution terminal 40 that is included in the within-area terminal list 294, the advertiser can get the electronic advertisement known to electronic advertisement distribution terminals 40 that are located within a predetermined area as the advertiser has intended to be. The advertiser can efficiently distribute the electronic advertisement in a way that promises a greater advertising effectiveness.

For example, an advertiser who has his/her store in a given place can distribute his/her electronic advertisement to only users who are currently around the store or preferentially to users who are currently around the store.

The present invention is not limited to the above embodiments but can be modified or developed in various manners. The components of the above embodiments may freely be combined.

In the embodiments described above, a cellular phone is used as the electronic advertisement distribution terminal 40, but the present invention can also be applied to mobile terminals such as PHS, PDA (Personal Digital Assistants), portable game consoles, laptop computers, and to ordinary personal computers and game consoles.

In the embodiments described above, an electronic advertisement is distributed via an e-mail, but the present invention can be applied to various messaging services via a communication network, such as SMS, IM, EMS (Enhanced Messaging Service), MMS (Multimedia Messaging Service), etc.

As one developed example, the advertiser can change the content of the electronic advertisement according to the number of times the advertisement has been delivered. The electronic advertisement distribution unit 253 decrements the number of remaining times to distribute the electronic advertisement by 1 each time the electronic advertisement is presented to another user. The electronic advertisement distribution unit 253 can change the content of the advertisement for the next distribution based on the number of remaining times for distribution. For example, in a case where the number of times to distribute designated by the advertiser is N times, latest information can be distributed such that it is messaged that "We will give a present for the first N customers" for the first distribution, that "We will give a present for the first (N-1) customers" for the second distribution, and that "We've got only a few presents left" for a distribution time closer to N. The electronic advertisement distribution unit 253 may notify the calculated number of remaining times for distribution to the electronic advertisement distribution terminal 40 and the electronic advertisement receiving unit 451 may receive the number of remaining times for distribution from the electronic advertisement distribution server 20. Then, the output unit 452 may output the received number of remaining times for distribution together with the electronic advertisement, etc.

As one developed example, the advertiser can change the content of the advertisement based on a group name included in the terminal list 292, in other words, based on grouping of the users (or terminals). The electronic advertisement distribution unit 253 can change the content of the advertisement based on the history information 291. For example, the number of times to distribute may be increased or additional benefit may be improved for a group that has presented more sending destinations for the electronic advertisement. For example, the number of times to distribute may be increased or additional benefit may be improved for a group to which more users (or more terminals) belong.

A program for controlling the electronic advertisement distribution terminal 40 or the electronic advertisement distribution server 20 to operate as the whole or a part of an apparatus may be distributed as stored in a computer-readable recording medium such as a memory card, a CD-ROM, a DVD, an MO (Magneto Optical disk), etc., and installed on another computer to control the computer to operate as the means described above or to perform the processes described above.

Furthermore, the program may be stored in a disk device or the like that is owned by a server device existing on the Internet so that the program may be embedded on a carrier wave and downloaded onto a computer.

The present application claims priority based on Japanese Patent Application No. 2006-236419, the content of which is incorporated herein in its entirety.
Industrial Applicability

As explained above, according to the present invention, it is possible to distribute an advertisement to many users efficiently.

## Claims

1. An electronic advertisement distribution system, comprising: a server (20) that distributes an electronic advertisement a number of times that is designated by an advertiser; and a plurality of terminals (40) that receive the electronic advertisement,
wherein (a) the server (20) includes:
a history storage unit (251) that stores history information that indicates a terminal to which the electronic advertisement has been distributed;
a terminal selecting unit (252) that selects any terminal from the plurality of terminals (40); and
an electronic advertisement distribution unit (253) that distributes the electronic advertisement to the selected terminal,
wherein (b) each of the plurality of terminals (40) includes:
an electronic advertisement receiving unit (451) that receives the electronic advertisement distributed by the server (20);
an output unit (452) that outputs the received electronic advertisement;
a sending destination entry receiving unit (453) that receives from a user, an entry of a new sending destination to which the electronic advertisement is to be sent; and
a sending destination notifying unit (454) that notifies the new sending destination to the server (20),
wherein (c) the server (20) further includes:
a sending destination receiving unit (254) that receives the new sending destination notified by the terminal (40); and
a permission condition determining unit (255) that determines based on the history information whether a permission condition that "a number of times the electronic advertisement has been sent has not yet reached the designated number of times, and the electronic advertisement has not yet been sent to the new sending destination" is satisfied or not, and
wherein in a case where the permission condition is satisfied, the electronic advertisement distribution unit (253) distributes the electronic advertisement to the new sending destination.

2. An electronic advertisement distribution system, comprising: a server (20) that distributes an electronic advertisement a number of times that is designated by an advertiser; and a plurality of terminals (40) that receive the electronic advertisement,
wherein (a) the server (20) includes:
a history storage unit (251) that stores history information that indicates a terminal to which the electronic advertisement has been distributed;
a terminal selecting unit (252) that selects any terminal from the plurality of terminals (40); and
an electronic advertisement distribution unit (253) that distributes to the selected terminal, the electronic advertisement, and notification necessary/unnecessary information that specifies whether notification of a new sending destination is necessary or not, depending on whether a number of times the electronic advertisement has been sent is smaller or not than the designated number of times,
wherein (b) each of the plurality of terminals (40) includes:
an electronic advertisement receiving unit (451) that receives the electronic advertisement and the notification necessary/unnecessary information distributed by the server (20);
an output unit (452) that outputs the received electronic advertisement;
a sending destination entry receiving unit (453) that receives from a user, an entry of a new sending destination to which the electronic advertisement is to be sent, in a case where the received notification necessary/unnecessary information specifies that notification is necessary; and
a sending destination notifying unit (454) that notifies the received new sending destination to the server (20),
wherein (c) the server (20) further includes:
a sending destination receiving unit (254) that receives the new sending destination notified by the terminal (40); and
a permission condition determining unit (255) that determines based on the history information whether a permission condition that "a number of times the electronic advertisement has been sent has not yet reached the designated number of times, and the electronic advertisement has not yet been sent to the new sending destination" is satisfied or not, and
wherein the electronic advertisement distribution unit (253) distributes the electronic advertisement to the new sending destination in a case where the permission condition is satisfied.

3. The electronic advertisement distribution system according to claim 1,
wherein the server (20) further includes a completion notification sending unit (256) that, when the new sending destination is received, sends referral reception completion notification to the terminal that has notified the new sending destination, and
wherein each of the plurality of terminals (40) further includes a completion notification receiving unit (455) that receives the referral reception completion notification.

4. The electronic advertisement distribution system according to claim 1,
wherein the server (20) further includes a completion notification sending unit (256) that, after the electronic advertisement is distributed to the new sending destination, sends referral reception completion notification to the terminal that has notified the new sending destination, and
wherein each of the plurality of terminals (40) further includes a completion notification receiving unit (455) that receives the referral reception completion notification.

5. The electronic advertisement distribution system according to claim 1,
wherein the server (20) further includes an addition control unit (257) that, when it is determined, while the permission condition is not satisfied, that the number of times the electronic advertisement has been sent has reached the designated number of times, performs control to query the advertiser of the electronic advertisement whether to increase the number of times to distributes the electronic advertisement, to receive an entry of addition information that indicates a number of times that is to be added, and to update the designated number of times based on the addition information.

6. The electronic advertisement distribution system according to claim 1,
wherein when it is determined, while the permission condition is not satisfied, that the electronic advertisement has already been sent to the new sending destination, the terminal selecting unit (252) selects a yet new sending destination randomly from the plurality of terminals (40).

7. The electronic advertisement distribution system according to claim 1,
wherein area information is designated for the electronic advertisement by the advertiser,
wherein the terminal (40) further includes:
a positional information acquiring unit (456) that acquires positional information that indicates a current position of the terminal (40); and
a positional information sending unit (457) that sends the acquired positional information to the server (20),
wherein the server (20) further includes a positional information receiving unit (258) that receives the positional information from the terminal (40),
wherein in the server (20):
the terminal selecting unit (252) randomly selects a terminal from terminals that are located within an area that is specified by the area information; and
the electronic advertisement distribution unit (253) distributes a terminal list that are located within the area specified by the area information to the terminal (40), and
wherein in the terminal (40):
the electronic advertisement receiving unit (451) receives the terminal list from the server (20); and
the sending destination entry receiving unit (453) makes any terminal be selected from the received terminal list, and determines the selected terminal as the new sending destination.

8. An electronic advertisement distribution server (20) that distributes an electronic advertisement to a plurality of terminals (40) a number of times that is designated by an advertiser, comprising:
a history storage unit (251) that stores history information that indicates a terminal to which the electronic advertisement has been distributed;
a terminal selecting unit (252) that selects any terminal from the plurality of terminals (40);
an electronic advertisement distribution unit (253) that distributes the electronic advertisement to the selected terminal;
a sending destination receiving unit (254) that receives a new sending destination to which the electronic advertisement is to be sent, which is notified by the terminal (40); and
a permission condition determining unit (255) that determines based on the history information whether a permission condition that "a number of times the electronic advertisement has been sent has not yet reached the designated number of times, and the electronic advertisement has not yet been sent to the new sending destination" is satisfied or not,
wherein the electronic advertisement distribution unit (253) distributes the electronic advertisement to the new sending destination in a case where the permission condition is satisfied.

9. An electronic advertisement distribution method that is performed by a server (20), which includes a history storage unit (251), and distributes an electronic advertisement to a plurality of terminals (40) a number of times that is designated by an advertiser,
history information that indicates a terminal to which the electronic advertisement has been distributed being stored in the history storage unit (251),
the method comprising:
a terminal selecting step of selecting any terminal from the plurality of terminals (40);
an electronic advertisement distributing step of distributing the electronic advertisement to the selected terminal;
a sending destination receiving step of receiving a new sending destination to which the electronic advertisement is to be sent, which is notified by the terminal (40); and
a permission condition determining step of determining based on the history information whether a permission condition that "a number of times the electronic advertisement has been sent has not yet reached the designated number of times, and the electronic advertisement has not yet been sent to the new sending destination" is satisfied or not,
wherein at the electronic advertisement distributing step, the electronic advertisement is distributed to the new sending destination in a case where the permission condition is satisfied.

10. A computer-readable information recording medium that stores a program that controls a computer, which distributes an electronic advertisement to a plurality of terminals a number of times that is designated by an advertiser, to function as:
a history storage unit (251) that stores history information that indicates a terminal to which the electronic advertisement has been distributed;
a terminal selecting unit (252) that selects any terminal from the plurality of terminals;
an electronic advertisement distribution unit (253) that distributes the electronic advertisement to the selected terminal;
a sending destination receiving unit (254) that receives from the terminal, a new sending destination to which the electronic advertisement is to be sent; and
a permission condition determining unit (255) that determines based on the history information whether a permission condition that "a number of times the electronic advertisement has been sent has not yet reached the designated number of times, and the electronic advertisement has not yet been sent to the new sending destination" is satisfied or not,
wherein said electronic advertisement distribution unit (255) distributes the electronic advertisement to the new sending destination in a case where the permission condition is satisfied.

11. A program that controls a computer, which distributes an electronic advertisement to a plurality of terminals a number of times that is designated by an advertiser, to function as:
a history storage unit (251) that stores history information that indicates a terminal to which the electronic advertisement has been distributed;
a terminal selecting unit (252) that selects any terminal from the plurality of terminals;
an electronic advertisement distribution unit (253) that distributes the electronic advertisement to the selected terminal;
a sending destination receiving unit (254) that receives from the terminal, a new sending destination to which the electronic advertisement is to be sent; and
a permission condition determining unit (255) that determines based on the history information whether a permission condition that "a number of times the electronic advertisement has been sent has not yet reached the designated number of times, and the electronic advertisement has not yet been sent to the new sending destination" is satisfied or not,
wherein the electronic advertisement distribution unit (253) distributes the electronic advertisement to the new sending destination in a case where the permission condition is satisfied.
